# EUROPEAN PATENT APPLICATION

(11) **EP 3 831 501 A1**
(43) Date of publication of application: **09.06.2021**
(21) Application number: 19843440.9
(22) Date of filing: 02.08.2019
(51) Int. Cl.: B08B 9/032, B08B 5/00, B08B 9/035, F28G 1/16, F28G 9/00, F28G 15/02

(54) **CLEANING DEVICE**

(30) Priority: 02.08.2018 JP 2018145664
(71) Applicant: Hitachi Zosen Corporation, Osaka-shi, Osaka 559-8559 (JP)
(72) Inventor: SATO Toru, Osaka-shi, Osaka 559-8559 (JP); NARIMO Hirotaka, Osaka-shi, Osaka 559-8559 (JP)
(74) Representative: Grünecker Patent- und Rechtsanwälte PartG mbB
(86) International application number: PCT/JP2019/030501
(87) International publication number: WO 2020/027324

(57) **Abstract**

A cleaning device 5 includes nozzles 61 configured to remove dust adhering to branch tubes 22 by injecting air to a tube bundle 3 from a side of a first face 31, and a traveling mechanism 8 configured to move the nozzles 61 along the first face 31.

## Description

### FIELD

The technique disclosed here relates to a cleaning device.

### BACKGROUND

There has been known a device including a tube bundle including a plurality of tubes and formed in a plate shape as a whole. Patent Document 1, for example, describes a steam condenser constituted by a tube bundle as described above. In the steam condenser disclosed in Patent Document 1, exhaust steam is distributed in the tubes, whereas the tubes are cooled by air from the outside. Accordingly, the exhaust steam is cooled and condensed.

### CITATION LIST

### PATENT DOCUMENT

Patent Document 1: Japanese Patent Application Publication No. 11-142067

### SUMMARY

### TECHNICAL PROBLEM

In such a tube bundle, dust can adhere to the outer surfaces of the tubes after long use. Thus, the outer surfaces of the tubes need to be cleaned regularly.

In one possible method for cleaning such a tube bundle, operation of a device including the tube bundle is stopped, a scaffold is temporarily built around the tube bundle, and cures for dust dispersion and other measures are prepared. In this state, an operator can manually remove dust from the outer surfaces of the tubes. In such a method, however, scaffolding and cures for dust dispersion and other measures are complicated, and in addition, the time required for the scaffolding and the measures is longer than the time for work of actually removing dust, resulting in a decrease in efficiency.

The technique disclosed here has been made in view of the foregoing circumstances and has an object of easily performing cleaning of dust adhering to tubes.

### SOLUTION TO PROBLEM

A cleaning device disclosed here is a cleaning device configured to clean a tube bundle including a plurality of tubes and having a plate shape as a whole with a first face and a second face that are opposed to each other, and the cleaning device includes: an injector configured to remove dust adhering to the tubes by injecting fluid to the tube bundle from a side of the first face; and a traveling mechanism configured to move the injector along the first face.

### ADVANTAGES OF INVENTION

The cleaning device is capable of easily performing cleaning on dust adhering to tubes.

### BRIEF DESCRIPTION OF THE DRAWINGS

[FIG. 1] FIG. 1 is a schematic view of a steam condensation system according to a first embodiment.
[FIG. 2] FIG. 2 is a transverse cross-sectional view of a tube bundle.
[FIG. 3] FIG. 3 is a block diagram illustrating a configuration of a cleaning device.
[FIG. 4] FIG. 4 is a side view of a steam condenser provided with the cleaning device.
[FIG. 5] FIG. 5 is a block diagram illustrating a functional configuration of a control device.
[FIG. 6] FIG. 6 is a flowchart depicting control of a controller.
[FIG. 7] FIG. 7 is a block diagram illustrating a configuration of a cleaning device according to a second embodiment.
[FIG. 8] FIG. 8 is a side view of a steam condenser provided with the cleaning device.
[FIG. 9] FIG. 9 is a flowchart depicting control of a controller.
[FIG. 10] FIG. 10 is a block diagram illustrating a configuration of a cleaning device according to a third embodiment.
[FIG. 11] FIG. 11 is a side view of a steam condenser 2 provided with the cleaning device.
[FIG. 12] FIG. 12 is a flowchart depicting control of a controller of a control device.
[FIG. 13] FIG. 13 is a block diagram illustrating a configuration of a cleaning device according to a fourth embodiment.
[FIG. 14] FIG. 14 is a side view of a steam condenser illustrating a traveling mechanism according to another embodiment.
[FIG. 15] FIG. 15 is a side view of a steam condenser illustrating a traveling mechanism according to still another embodiment.
[FIG. 16] FIG. 16 is a flowchart depicting control of a controller according to another embodiment.

### DESCRIPTION OF EMBODIMENTS

### First Embodiment

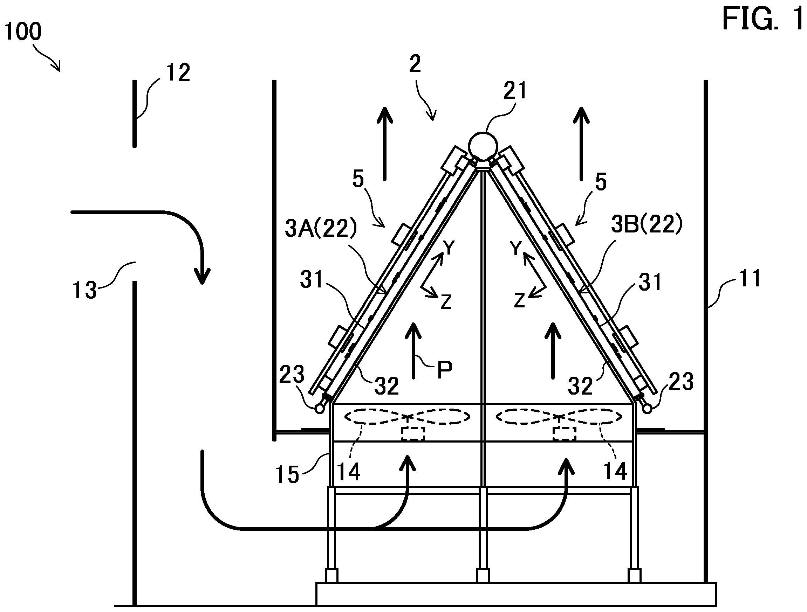

An exemplary embodiment will be described in detail hereinafter with reference to the drawings. FIG. 1 is a schematic view of a steam condensation system 100 according to a first embodiment.

The steam condensation system 100 cools steam by air to thereby condense the steam. The steam condensation system 100 includes a steam condenser 2, fans 14 that send air to the steam condenser 2, and a cleaning device 5 that cleans the steam condenser 2.

The steam condenser 2, the fans 14, and the cleaning device 5 are disposed in a chamber 11. Frames 15 are assembled in the chamber 11. The steam condenser 2 and the fans 14 are provided on the frames 15. The fans 14 are disposed below the steam condenser 2. The chamber 11 is connected to an air passage 12 in which air for cooling is distributed. Outdoor air flows into the air passage 12 through an inlet 13. The steam condenser 2 is supplied with exhaust steam (hereinafter simply referred to as "steam") exhausted from a device using steam, such as a power generating turbine (not shown). The steam is distributed inside the steam condenser 2. The fans 14 send air distributed in the air passage 12 to the steam condenser 2. An upward airflow occurs in the chamber 11. That is, the chamber 11 forms a channel P in which air flows upward. While passing through the steam condenser 2, the air exchanges heat with steam distributed in the steam condenser 2. The steam is cooled by the air to be condensed. The resulting condensate is discharged from the steam condenser 2. The air that has passed through the steam condenser 2 flows upward out of the chamber 11. When the steam condensation system 100 continuously operates, dust adheres to the steam condenser 2. The cleaning device 5 removes dust adhering to the steam condenser 2.

The steam condenser 2 includes one steam manifold 21 to which steam is supplied, a plurality of branch tubes 22 branched off from the steam manifold 21, and two concentrated tubes 23 into which the branch tubes 22 are concentrated. The steam supplied to the steam manifold 21 flows into the plurality of branch tubes 22, and is condensed while being distributed in the branch tubes 22, and becomes condensate. The condensate flows from the branch tubes 22 into the concentrated tubes 23, and lastly, is discharged through the concentrated tubes 23. The branch tubes 22 are an example of tubes.

The plurality of branch tubes 22 are divided into a first tube bundle 3A constituted by branch tubes 22 extending from the steam manifold 21 in an obliquely downward direction, and a second tube bundle 3B constituted by branch tubes 22 extending from the steam manifold 21 in another obliquely downward direction. The first tube bundle 3A and the second tube bundle 3B are formed in a gable roof shape using the steam manifold 21 as its ridge. The lower end (i.e., an end opposite to the steam manifold 21) of the branch tubes 22 of the first tube bundle 3A is connected to one of the concentrated tubes 23. The lower end (i.e., an end opposite to the steam manifold 21) of the branch tubes 22 of the second tube bundle 3B is connected to the other concentrated tube 23. The two concentrated tubes 23 extend substantially in parallel with the steam manifold 21. The branch tubes 22 are perpendicularly connected to each of the steam manifold 21 and the concentrated tubes 23.

The fans 14 are disposed below, more specifically immediately under, the first tube bundle 3A and the second tube bundle 3B.

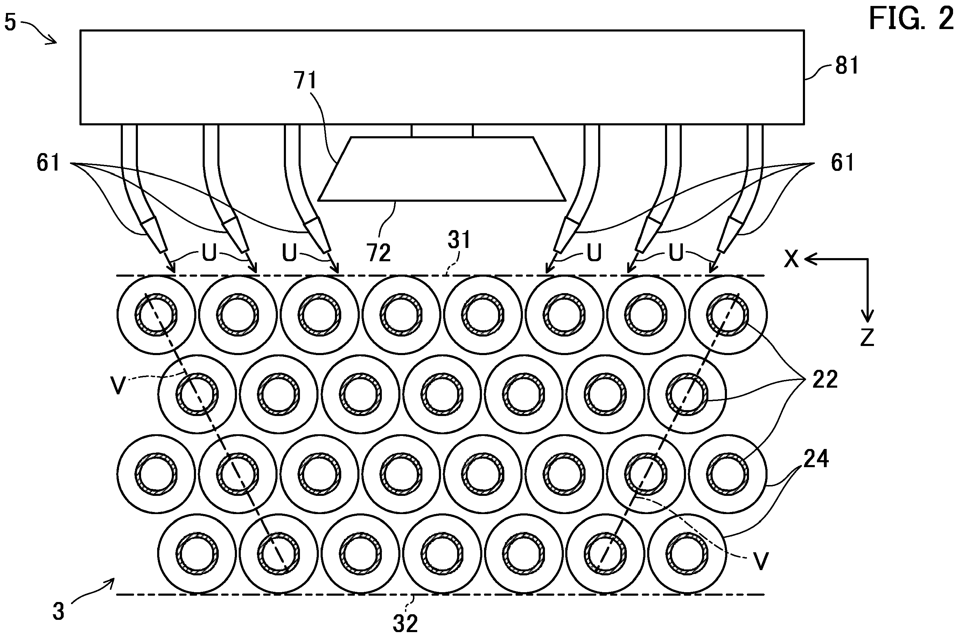

The branch tubes 22 and the tube bundle 3 will be described in further detail. In a case where the first tube bundle 3A and the second tube bundle 3B are not distinguished from each other, these tube bundles will be simply referred to as "tube bundles 3." FIG. 2 is a transverse cross-sectional view (cross-sectional view orthogonal to the axes of the branch tubes 22) of the tube bundle 3.

A plurality of fins 24 are provided at the outer peripheral surfaces of the branch tubes 22. That is, the branch tubes 22 are of a fin-and-tube type. In the tube bundle 3, the plurality of branch tubes 22 are arranged substantially in parallel, and are formed in a plate shape as a whole with a first face 31 and a second face 32 that are opposed to each other. For simplicity of description, in each tube bundle 3, X directions will refer to directions along which the steam manifold 21 extends, Y directions will refer to directions along which the branch tubes 22 extend, and Z directions will refer to directions orthogonal to both the X directions and the Y directions, that is, the thickness direction of the plate-shaped tube bundle 3. This means the first face 31 and the second face 32 are planes substantially parallel to a XY plane.

More specifically, in the tube bundle 3, the plurality of branch tubes 22 arranged on the same plane form one layer, and a plurality of such layers are stacked along the Z directions. In the example illustrated in FIG. 2, the tube bundle 3 is formed of four-layered branch tubes 22. In this case, in adjacent two layers, branch tubes 22 forming one layer and branch tubes 22 forming the other layer are arranged such that the axes thereof are offset along the X directions. That is, in the tube bundle 3, the branch tubes 22 are arranged in a staggered pattern as a whole.

The thus-formed tube bundle 3 tilts with respect to the vertical direction in the chamber 11 as illustrated in FIG. 1. In this arrangement, the first face 31 faces obliquely upward, and the second face 32 faces obliquely downward. The chamber 11 serves as the channel P in which air flows upward with the fans 14. The tube bundle 3 is disposed on the channel P, and air passes through the tube bundle 3, while flowing from the second face 32 toward the first face 31 through gaps among the branch tubes 22. The air passing through the tube bundle 3 is heated by heat exchange with the branch tubes 22. Accordingly, a heat exchange efficiency of branch tubes 22 near the first face 31 is lower than a heat exchange efficiency of the branch tubes 22 near the second face 32. In view of this, the branch tubes 22 does not extend linearly between the steam manifold 21 and the concentrated tubes 23, but is twisted in an intermediate portion between the steam manifold 21 and the concentrated tubes 23, and the position of the branch tubes 22 in the thickness direction of the tube bundle 3, that is, the Z directions, is changed between an upper half and a lower half of the tube bundle 3. Specifically, branch tubes 22 that are sequentially arranged from the first face 31 toward the second face 32 in the upper half of the tube bundle 3 are sequentially arranged from the second face 32 toward the first face 31 in the lower half of the tube bundle 3. For example, the branch tubes 22 forming the second face 32 in the upper half of the tube bundle 3 form the first face 31 in the lower half of the tube bundle 3. Accordingly, an imbalance of the heat exchange efficiency of the branch tubes 22 in the Z directions of the tube bundle 3 is smoothed. It should be noted that since the branch tubes 22 are twisted such that the position thereof in the Z directions is changed as described above, the position in the X directions is slightly shifted between the branch tubes 22 in the upper half of the tube bundle 3 and the branch tubes 22 in the lower half of the tube bundle 3. That is, the branch tubes 22 in the lower half are offset from the branch tubes 22 in the upper half in the X directions.

Here, the air can include dust in some cases. Part of the dust included in the air adheres to the surfaces of the branch tubes 22 including the fins 24 while passing through the gaps between the branch tubes 22. Since the air passes through the tube bundle 3 from the second face 32 toward the first face 31, a larger amount of dust adheres to the branch tubes 22 near the second face 32. The cleaning device 5 removes dust adhering to the branch tubes 22.

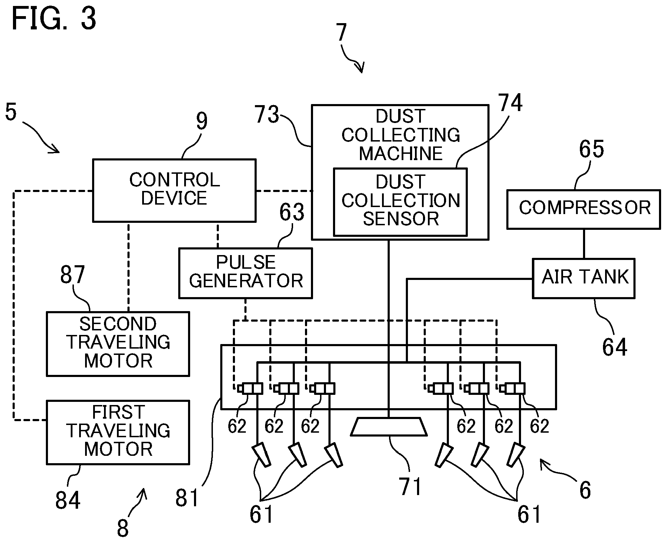

FIG. 3 is a block diagram illustrating a configuration of the cleaning device 5. The cleaning device 5 is provided in each tube bundle 3. The cleaning device 5 includes nozzles 61 that remove dust adhering to the branch tubes 22, and a traveling mechanism 8 that moves the nozzles 61 along the first face 31 of the tube bundle 3. The cleaning device 5 may further include a dust collecting mechanism 7 that collects dispersed dust. The cleaning device 5 may also further include a control device 9 that controls the entire cleaning device 5.

The nozzles 61 are included in an injection mechanism 6 that removes dust adhering to the branch tubes 22. The injection mechanism 6 includes six nozzles 61, six valves 62, a pulse generator 63, an air tank 64, and a compressor 65.

The nozzles 61, the air tank 64, and the compressor 65 are connected to one another by pipes or hoses. The compressor 65 compresses air and supplies the compressed air to the air tank 64. The air tank 64 stores high-pressure air, and supplies the high-pressure air to the nozzles 61. The valves 62 are disposed between the air tank 64 and the nozzles 61. Each of the valves 62 switches air from the air tank 64 to an associated one of the nozzles 61 between distribution and shut-off Each valve 62 operates in response to a signal from the pulse generator 63. The nozzles 61 inject air supplied from the air tank 64. Specifically, the nozzles 61 inject air to the tube bundle 3 from a side of the first face 31, i.e., from a first face side of the tube bundle 3, thereby removing dust adhering to the branch tubes 22. The nozzles 61 are an example of an injector, and air is an example of fluid injected by the injector.

The dust collecting mechanism 7 includes a dust collecting hood 71 and a dust collecting machine 73.

The dust collecting hood 71 is connected to the dust collecting machine 73 through a pipe or a hose. The dust collecting machine 73 is configured to suck air. That is, the dust collecting machine 73 sucks dust near the dust collecting hood 71 together with air through the dust collecting hood 71. The dust collecting machine 73 is configured to adjust the capacity of sucking air, that is, a suction power of air. The dust collecting machine 73 includes a dust collection sensor 74. The dust collection sensor 74 detects the amount of dust included in air sucked by the dust collecting machine 73. The dust collecting hood 71 is an example of a sucker.

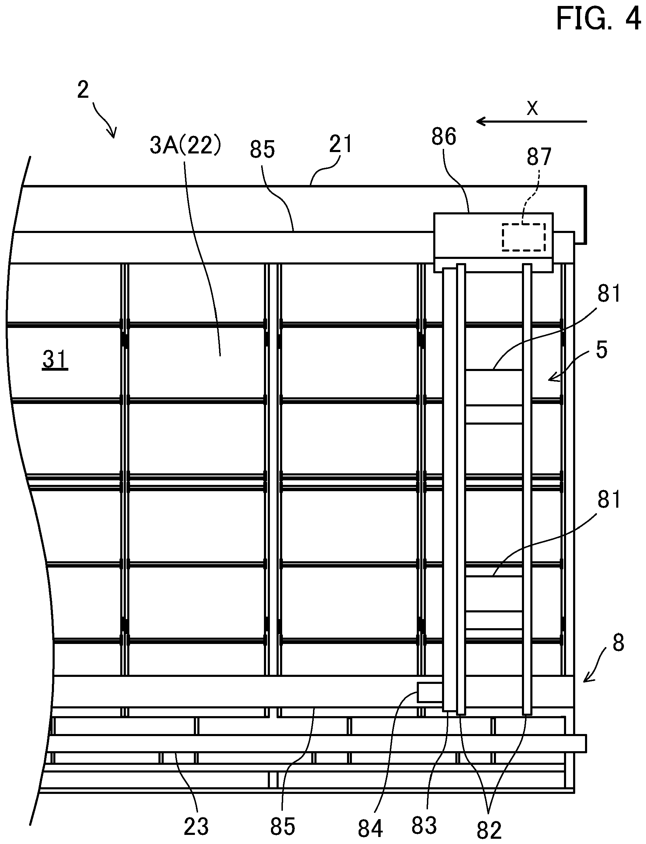

FIG. 4 is a side view of a steam condenser 4. A traveling mechanism 8 moves the nozzles 61 in two orthogonal directions along the first face 31. For example, as also illustrated in FIG. 4, the traveling mechanism 8 includes two carriages 81, a pair of longitudinal frames 82 that guides the carriages 81 in the Y directions, a driving belt 83 and a first traveling motor 84 that moves the carriages 81 along the longitudinal frames 82, a pair of lateral frames 85 that guides the longitudinal frames 82 in the X directions, and a traveling car 86 and a second traveling motor 87 for moving the longitudinal frames 82 along the lateral frames 85. The traveling mechanism 8 causes the carriages 81 to travel along the first face 31 of the tube bundle 3.

The longitudinal frames 82 extend substantially in parallel with the Y directions, that is, with the branch tubes 22. The longitudinal frames 82 extend substantially over the entire length of the branch tubes 22. The longitudinal frames 82 support the carriages 81 such that the carriages 81 are movable in the Y directions. An upper half of the longitudinal frames 82 in the Y directions supports one of the carriages 81, and a lower half of the longitudinal frames 82 in the Y directions support the other carriage 81. As described above, in accordance with an offset of the upper-half branch tubes 22 and the lower-half branch tubes 22 of the tube bundle 3 in the X directions, the upper-half longitudinal frames 82 and the lower-half longitudinal frames 82 respectively guide the carriages 81 in the Y directions such that one carriage 81 is offset from the other carriage 81 in the X directions.

The driving belt 83 is an endless belt, and is provided along one of the longitudinal frames 82. The driving belt 83 is wound around a driving pulley and a driven pulley (not shown). The carriages 81 are fixed to the driving belt 83.

The first traveling motor 84 drives and rotates the driving pulley to thereby drive the driving belt 83. When the driving belt 83 is driven, the carriages 81 move together with the driving belt 83 while being guided by the longitudinal frames 82. That is, the carriages 81 move in the Y directions by driving of the first traveling motor 84.

The lateral frames 85 extends in the X directions. The lower lateral frame 85 is disposed near the concentrated tubes 23, and the upper lateral frame 85 is disposed near the steam manifold 21. The lower lateral frame 85 supports the lower end of each of the pair of longitudinal frames 82 such that the pair of longitudinal frames 82 is movable in the X directions. The upper lateral frame 85 supports the traveling car 86 such that the traveling car 86 is movable in the X directions. The traveling car 86 travels along the upper lateral frame 85. The upper end of each of the pair of longitudinal frames 82 is coupled to the traveling car 86.

The traveling car 86 includes a second traveling motor 87. The second traveling motor 87 drives the traveling car 86. The traveling car 86 moves in the X directions along the upper lateral frame 85 by driving of the second traveling motor 87. The longitudinal frames 82 are coupled to the traveling car 86, and the longitudinal frames 82 support the carriages 81. Thus, the carriages 81 move in the X directions together with movement of the traveling car 86.

The two carriages 81 are supported by the longitudinal frames 82 with an interval in the Y directions, and are fixed to the driving belt 83. The interval between the two carriages 81 is approximately a half of the entire length of the branch tubes 22. The nozzles 61, the valves 62, and the dust collecting hood 71 are attached to the carriages 81. That is, two sets of the nozzles 61, the valves 62, and the dust collecting hood 71 are provided. The nozzles 61, the valves 62, and the dust collecting hood 71 move together with the carriages 81. The nozzles 61, the valves 62, and the dust collecting hood 71 attached to the upper carriage 81 clean an upper half of the tube bundle 3, and the nozzles 61, the valves 62, and the dust collecting hood 71 attached to the lower carriage 81 clean a lower half of the tube bundle 3.

As described above, the traveling mechanism 8 moves the carriages 81 along the longitudinal frames 82, and moves the longitudinal frames 82 along the lateral frames 85, thereby moving the nozzles 61 along the first face 31. In addition, since the dust collecting hood 71 is attached to the carriages 81, the dust collecting hood 71 also moves along the first face 31 together with the nozzles 61 as one unit. The positions of the carriages 81 can be detected by encoders provided in the first traveling motor 84 and the second traveling motor 87 or by sensors (e.g., photoelectric sensors or magnetic sensors) provided on the longitudinal frames 82 and used for detecting positions of the carriages 81 in the Y directions and sensors (e.g., photoelectric sensors or magnetic sensors) provided on the lateral frames 85 and used for detecting the position of the traveling car 86 in the X directions.

Here, arrangement of the nozzles 61 and the dust collecting hood 71 will be described in detail with reference to FIG. 2. FIG. 2 does not show the longitudinal frames 82 and the driving belt 83.

The six nozzles 61 are arranged in the X directions. An injection direction U of each nozzle 61 tilts with respect to the Z directions. Specifically, the injection direction U of each nozzle 61 is parallel to a ZX plane (i.e., plane orthogonal to the axes of the branch tubes 22) and tilts with respect to the Z directions (i.e., also with respect to the X directions). More specifically, the branch tubes 22 are arranged in a staggered pattern and stacked in four layers, resulting in that four branch tubes 22 are arranged in directions V (hereinafter referred to as "tilt directions V") that tilt in the Z directions. The injection direction U of each nozzle 61 is substantially parallel to the tilt directions V.

In this example, in the six nozzles 61, the injection direction U of three nozzles 61 at one side in the X directions is different from the injection direction U of three nozzles 61 at the other side in the X direction. Specifically, in the case where the branch tubes 22 are arranged in a staggered pattern, there are two intersecting tilt directions V, as illustrated in FIG. 2. The injection direction U of the three nozzles 61 at the one side in the X directions are substantially parallel to one tilt direction V. The injection direction U of the three nozzles 61 at the other side in the X directions are substantially parallel to the other tilt direction V. Consequently, the injection direction U of the three nozzles 61 at the one side in the X directions and the injection direction U of the three nozzles 61 at the other side in the X directions are oriented toward the center of the six nozzles 61.

The three nozzles 61 at the one side in the X directions are arranged at regular intervals in the X directions. The interval between the nozzles 61 is equal to the pitch of the branch tubes 22 arranged in the X directions. The three nozzles 61 at the other side in the X directions are arranged similarly.

The dust collecting hood 71 is disposed at substantially the center of the six nozzles 61. That is, the dust collecting hood 71 is disposed at the same side as the nozzles 61 with respect to the tube bundle 3. In the Y directions, the dust collecting hood 71 is disposed substantially at the same locations as the six nozzles 61. The dust collecting hood 71 has a suction port 72 through which dust is sucked. The dust collecting hood 71 is disposed such that the suction port 72 faces the first face 31 of the tube bundle 3.

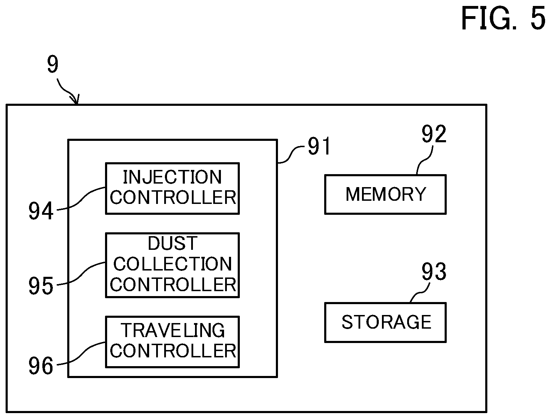

Next, the control device 9 will be described. FIG. 5 is a block diagram illustrating a configuration of the control device 9.

The control device 9 includes a controller 91, a memory 92, and a storage 93.

The controller 91 is formed by, for example, a processor such as a central processing unit (CPU). The controller 91 executes various types of processing by developing programs stored in, for example, the storage 93 to the memory 92 and executing the programs. The controller 91 may be implemented by hardware such as a large scale integration (LSI) having a function similar to that of a processor.

The memory 92 is a computer-readable recording medium and formed by, for example, a read only memory (ROM), an erasable programmable ROM (EPROM), an electrically erasable programmable ROM (EEPROM), or a random access memory (RAM).

The storage 93 is a computer-readable recording medium, and is formed by, for example, a hard disk. The storage 93 may be formed by, for example, an optical disk such as a CD-ROM. The storage 93 stores programs and various types of information necessary for executing processing of the controller 91.

The controller 91 includes, as functional configuration, an injection controller 94 that controls the injection mechanism 6, a dust collection controller 95 that controls the dust collecting mechanism 7, and a traveling controller 96 that controls the traveling mechanism 8. That is, the controller 91 functions as the injection controller 94, the dust collection controller 95, and the traveling controller 96 by developing programs stored in, for example, the storage 93 to the memory 92 and executing the programs.

The injection controller 94 controls the pulse generator 63. Accordingly, the injection controller 94 causes the nozzles 61 to inject air intermittently.

The dust collection controller 95 controls the dust collecting machine 73. The dust collection controller 95 adjusts an air suction power of the dust collecting machine 73 in accordance with the amount of dust collection by the dust collecting mechanism 7, that is, a detection result of the dust collection sensor 74.

The traveling controller 96 controls the first traveling motor 84 and the second traveling motor 87. The traveling controller 96 adjusts the rotation speed of the first traveling motor 84, that is, the traveling speed of the carriages 81 in the Y directions, in accordance with the amount of dust collection of the dust collecting mechanism 7, that is, a detection result of the dust collection sensor 74.

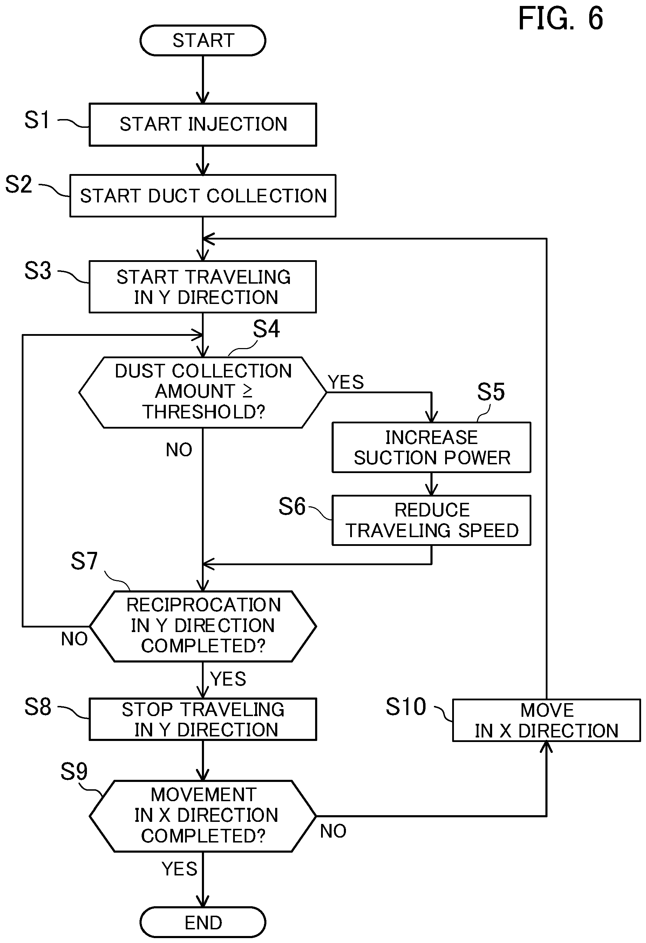

Then, control of the controller 91 will be specifically described with reference to FIG. 6. FIG. 6 is a flowchart depicting control of the controller 91. Cleaning by the cleaning device 5 is performed during operation of the steam condenser 2.

The controller 91 starts cleaning in response to a start instruction from an operator. At the start, the carriages 81 are located at a predetermined start position, for example, the lower end of the movable range of the carriages 81 in the longitudinal frames 82. At the start, the longitudinal frames 82 are located at a predetermined start position, for example, an end of the tube bundle 3 in the X directions. At this time, as illustrated in FIG. 2, the position of the carriages 81 in the X directions is defined such that the injection direction U of each nozzle 61 matches with a gap between a line of branch tubes 22 arranged in the tilt direction V and another line adjacent to the line of branch tubes 22 arranged in the tilt direction V.

First, in step S1, the injection controller 94 causes the pulse generator 63 to output a pulse signal. In the pulse signal, a pulse having a predetermined pulse width is repeated in predetermined cycles. The pulse signal output from the pulse generator 63 is input to each of the valves 62. The valve 62 opens the channel only while a pulse is present so that air from the air tank 64 is distributed in the corresponding nozzle 61. Accordingly, the nozzle 61 injects air. In a period in which no pulse is present, the valve 62 closes the channel so that air supply from the air tank 64 to the nozzle 61 is shut off. During this period, the nozzle 61 stops injecting air. In this manner, the nozzle 61 injects air intermittently.

In step S2, the dust collection controller 95 causes the dust collecting machine 73 to operate and to suck air and dust near the dust collecting hood 71. At this time, the dust collection controller 95 adjusts a suction power of the dust collecting machine 73 to a predetermined initial value.

In step S3, the traveling controller 96 causes the first traveling motor 84 to operate. Accordingly, the carriages 81 start moving along the longitudinal frames 82 in the Y direction. At this time, the traveling controller 96 adjusts the rotation speed of the first traveling motor 84 to a predetermined initial value. It should be noted that the traveling controller 96 does not cause the second traveling motor 87 to operate. That is, the carriages 81 move only in the Y directions and does not move in the X directions.

As described above, when cleaning starts, the nozzles 61 intermittently inject air while moving together with the carriages 81, and the dust collecting machine 73 sucks air and dust around the dust collecting hood 71 moving together with the carriages 81. The air injected from the nozzles 61 removes dust adhering to the branch tubes 22 while passing through the tube bundle 3 from the first face 31 toward the second face 32.

At this time, since the nozzles 61 intermittently inject air, a sufficient time is obtained for recovery of the pressure of air supplied from the air tank 64 to the nozzles 61. That is, the pressure of air injected from the nozzles 61 is highest at the start of injection. As the injection continues, the pressure of injected air gradually decreases. When the injection of air from the nozzles 61 is stopped, the pressure of air supplied to the nozzles 61 gradually increases and recovers. It is possible to obtain the time for recovery of the pressure of air supplied to the nozzles 61 by intermittently injecting air from the nozzles 61. As a result, air at a higher pressure can be injected from the nozzles 61 so that dust removing capacity can be thereby enhanced.

In addition, the nozzles 61 inject air in a direction that tilts with respect to the thickness direction of the tube bundle 3, more specifically a direction that tilts with respect to a YZ plane. Accordingly, dust removing capacity can be enhanced. Specifically, as described above, dust easily adheres to portions of the branch tubes 22 near the second face 32. That is, dust easily adheres to the back side of the branch tubes 22 when seen from the first face 31. If the nozzles 61 inject air in the thickness direction of the tube bundle 3, air does not easily reach the back side of the branch tubes 22. In view of this, the nozzles 61 inject air in a direction that tilts with respect to the thickness direction of the tube bundle 3 so that air easily thereby reaches the back side of the branch tubes 22. As a result, dust removing capacity can be enhanced. In addition, in the tube bundle 3 of this example, the branch tubes 22 are stacked in a staggered pattern, and thus, the plurality of branch tubes 22 are arranged in the tilt directions V that tilt with respect to the thickness direction, as illustrated in FIG. 2. As a result, a gap between a line of branch tubes 22 arranged in the tilt direction V and another line adjacent to the line of branch tubes 22 arranged in the tilt direction V also extends substantially in the tilt direction V. That is, the nozzles 61 inject air substantially in the same direction as the direction in which the gap between the lines formed by the plurality of stacked branch tubes 22 extends. As a result, air injected from the nozzles 61 easily passes through the tube bundle 3 from the first face 31 toward the second face 32. As described above, although a larger amount of dust adheres to a part of the branch tubes 22 near the second face 32, such dust can be sufficiently removed by increasing the amount of air passing toward the second face 32.

Although the removed dust is dispersed, an airflow toward the dust collecting hood 71 occurs around the dust collecting hood 71. The dispersed dust is sucked from the dust collecting hood 71 together with this airflow. Since operation of the steam condenser 2 continues, an airflow caused by the fans 14 occurs near the second face 32 of the tube bundle 3. Accordingly, a large amount of dust removed by air from the nozzles 61 is dispersed toward the second face 32 of the tube bundle 3, but can pass through the tube bundle 3 by an airflow from the fans 14 and be dispersed toward the first face 31 of the tube bundle 3. In this manner, the efficiency of sucking dust from the dust collecting hood 71 can be enhanced.

Such removal and suction of dust are performed while the nozzles 61 and the dust collecting hood 71 are moving in the Y directions. During this process, in step S4, the dust collection controller 95 determines whether the amount of collected dust is greater than or equal to a predetermined threshold or not, based on a detection result of the dust collection sensor 74. That is, the dust collection controller 95 determines whether the dust collection amount is large or not.

If the dust collection amount is greater than or equal to the threshold, the dust collection controller 95 increases the suction power of the dust collecting machine 73 in step S5. In addition, in step S6, the traveling controller 96 reduces the speed of the first traveling motor 84. That is, if the dust collection amount is large, the suction power of the dust collecting machine 73 is increased so that a larger amount of dust can be sucked. A large dust collection amount means that a large amount of dust adheres to the branch tubes 22 at this location. Thus, by reducing the speed of the first traveling motor 84, the speed of movement of the carriages 81, and further the nozzles 61 and the dust collecting hood 71, in the Y directions is reduced. Accordingly, air is injected to the branch tubes 22 at this location for a longer time so that dust can be thereby removed more elaborately. In this manner, the amount of dust removed from the branch tubes 22 and dispersed increases, and thus, the increased amount of dust can be appropriately collected by increasing the suction power of the dust collecting machine 73.

If the dust collection amount is less than the threshold, or after the speed of the first traveling motor 84 has been reduced in step S6, the traveling controller 97 determines whether reciprocation of the carriages 81 in the Y directions is completed or not in step S7. The carriages 81 moves from the lower end of a movable range of the carriers 81 on the longitudinal frames 82, which is a start position, to the upper end of the movable range, and then returns to the lower end of the movable range. As described above, cleaning of the branch tubes 22 is performed at the same position in the X directions in both an outward path and a return path of the carriages 81 in the Y directions.

If reciprocate of the carriages 81 in the Y directions is not completed, the process by the dust collection controller 9 in step S4 is performed. That is, while the carriages 81 reciprocate in the Y directions, steps S4 through S7 are repeated.

If reciprocation of the carriages 81 in the Y directions is completed, the traveling controller 97 stops the first traveling motor 84 in step S8. Accordingly, movement of the carriages 81 in the Y direction stops.

Subsequently, in step S9, the traveling controller 97 determines whether movement of the longitudinal frames 82 in the X directions is completed or not. As described above, when cleaning starts, the longitudinal frames 82 are located at one end of the tube bundle 3 in the X directions, which is the start position. The longitudinal frames 82 move from the start position to a predetermined distance in the X direction at each time during cleaning, and finally move to the other end of the tube bundle 3 in the X direction.

If movement of the longitudinal frames 82 in the X direction is not completed, the traveling controller 97 causes the second traveling motor 87 to operate and causes the longitudinal frames 82 to move in the X direction to the predetermined distance in step S10. In this example, the predetermined distance in movement in the X direction, that is, a movement pitch in the X direction, is three times as large as the pitch of the branch tubes 22 arranged in the X direction. As described above, the six nozzles 61 are divided into groups having different injection directions U and each constituted by three nozzles. The branch tubes 22 arranged in a staggered pattern form gaps between the branch tubes 22 extending in the tilt directions V. Three nozzles 61 of one group having an identical injection direction U individually inject air to the respective three gaps arranged in the X directions. That is, in one reciprocation of the carriage 61 in the Y directions, three gaps that are gaps between the branch tubes 22 and are arranged in the X directions are cleaned at the same time. In three nozzles 61 of another group having an identical injection direction U clean three gaps that are gaps between the branch tubes 22, extend in another tilt direction V, and are arranged in the X directions, at the same time. In view of this, the longitudinal frames 82 are moved in the X direction to a distance three times as large as the pitch of the branch tubes 22 in the X directions so that three nozzles 61 of each group having an identical injection direction U moves to a position at which uncleaned three gaps adjacent to the cleaned three gaps can be cleaned. By setting the movement pitch to the X directions as described above, gaps extending in the tilt direction V between the branch tubes 22 can be cleaned in units of three gaps at each time without overlapping and without missing any gaps.

Once the traveling controller 97 moves the longitudinal frames 82 in the X direction to a predetermined distance, the traveling controller 97 stops the second traveling motor 87. Subsequently, the traveling controller 97 returns to step S3, and causes the first traveling motor 84 to operate. That is, the carriages 81 start reciprocating in the Y directions at a position different from the previous position in the X directions.

Thereafter, steps S4 through S10 are repeated until movement of the longitudinal frames 82 in the X direction is completed.

At the time when movement of the longitudinal frames 82 in the X direction is completed, the entire XY plane of the tube bundle 3 has been cleaned. Thus, the controller 91 finishes cleaning.

As described above, cleaning by the cleaning device 5 is performed by injection of air from the nozzles 61 to the tube bundle 3 while the nozzles 61 are moved by the traveling mechanism 8 along the first face 31. As compared to a case where an operator manually blows air to the tube bundle 3 for cleaning, cleaning of the tube bundle 3 can be easily performed. In particular, since no scaffold is needed for the operator to work, cleaning efficiency increases.

Moreover, the cleaning device 5 includes the dust collecting mechanism 7 so that dispersed dust is sucked by the dust collecting mechanism 7 while dust on the branch tubes 22 is removed with the nozzles 61. Accordingly, work such as cares against dust is unnecessary. This also increases cleaning efficiency. Furthermore, since protection against dust, for example, is unnecessary, cleaning of the tube bundle 3 can be performed while normal use of the tube bundle 3, that is, use of the steam condenser 2, continues.

Fluid injected from the nozzles 61 is air. This eliminates a waste liquid treatment during cleaning. Even in the configuration in which the fans 14 are disposed immediately under the tube bundle 3, cleaning of the tube bundle 3 can be performed without stopping of operation of the fans 14, that is, with the use of the steam condenser 2 being continued.

As described above, the cleaning device 5 includes the nozzles 61 (injector) that remove dust adhering to the branch tubes 22 (tubes) by injecting air (fluid) to the first face 31 of the tube bundle 3, and the traveling mechanism 8 that moves the nozzles 61 along the first face 31.

With this configuration, the operator does not blow fluid to the tube bundle 3, but the nozzles 61 inject air to the tube bundle 3 while being moved by the traveling mechanism 8. Thus, cleaning of the tube bundle 3 can be easily performed. In addition, it is unnecessary for the operator to build a scaffold or the like for cleaning around the tube bundle 3, and thus, cleaning of dust adhering to the branch tubes 22 can be easily performed.

The nozzles 61 inject air in a direction that tilts with respect to the thickness direction of the tube bundle 3.

With this configuration, even in the configuration in which the nozzles 61 inject air to the tube bundle 3 from a side of the first face 31, the air can easily reach a portion of the tube bundle 3 near the second face 32. That is, since the nozzles 61 inject air to the plate-shaped tube bundle 3 from the side of the first face 31, air does not easily reach the second face 32 of the tube bundle 3. The injection directions U of the nozzles 6 are formed to tilt with respect to the thickness direction of the tube bundle 3 so that air can easily reach the second face 32 of the tube bundle 3. This enhances the capacity of removing dust adhering to the second face 32 of the tube bundle 3.

In particular, in the configuration in which the branch tubes 22 are stacked in the thickness direction of the tube bundle 3 and the branch tubes 22 are arranged in a staggered pattern, the injection directions U of the nozzles 61 are formed to tilt with respect to the thickness direction of the tube bundle 3 so that air can easily enter gaps between the branch tubes 22. In this manner, even when the nozzles 61 inject air from the side of the first face 31 in the configuration in which the branch tubes 22 are stacked in the thickness direction of the tube bundle 3, air easily reaches a portion of the branch tubes 22 near the second face 32.

In addition, the nozzles 61 inject air intermittently while being moved by the traveling mechanism 8.

This configuration can obtain the time for recovery of the pressure of air supplied from the air tank 64 to the nozzles 61. As a result, air at a higher pressure can be injected from the nozzles 61 so that dust removing capacity can be thereby enhanced.

The cleaning device 5 further includes the dust collecting mechanism 7 that collects dispersing dust.

With this configuration, while the nozzles 61 are moved by the traveling mechanism 8 and remove dust from the branch tubes 22, dispersing dust can be collected by the dust collecting mechanism 7. This eliminates the necessity for providing cures for dust dispersion during cleaning and other measures, and cleaning of dust adhering to the branch tubes 22 can be easily performed. Furthermore, since such cures and other measures are unnecessary, cleaning of the tube bundle 3 can be performed while normal use of the tube bundle 3, that is, use of the steam condenser 2, continues.

The dust collecting mechanism 7 includes the dust collecting hood 71 (sucker) having the suction port 72 through which dust is sucked. The dust collecting hood 71 is configured to move together with the nozzles 61.

With this configuration, dust removed from the branch tubes 22 by air injected from the nozzles 61 can be efficiently collected. Specifically, in the case of cleaning the tube bundle 3 with movement of the nozzles 61, a large amount of dust removed from the branch tubes 22 rises in a place where the nozzles 61 perform cleaning or its peripheral places. That is, the place where dust rises changes with movement of the nozzles 61. When the dust collecting hood 71 moves together with the nozzles 61, the dust collecting hood 71 is also allowed to move with a change of the place where dust rises. As a result, dust collection efficiency can be enhanced.

The dust collecting hood 71 is disposed at the same side as the nozzles 61 with respect to the tube bundle 3.

With this configuration, since the nozzles 61 inject air to the tube bundle 3 from the side of the first face 31, removed dust is easily dispersed toward the second face 32 of the tube bundle 3 together with an airflow. On the other hand, since the dust collecting hood 71 is also disposed at the side of the first face 31, removed dust also flows toward the first face 31 together with an air flow sucked into the dust collecting hood 71 and is sucked by the dust collecting hood 71. In the manner described above, the nozzles 61 and the dust collecting hood 71 are disposed at the same side with respect to the tube bundle 3 so that the nozzles 61 and the dust collecting hood 71 can be placed easily.

The traveling mechanism 8 changes a traveling speed in accordance with the dust collection amount of the dust collecting mechanism 7.

With this configuration, the degree of thoroughness of cleaning can be changed in accordance with the amount of dust. For example, a large amount of dust collection amount of the dust collecting mechanism 7 means a large amount of dust removed by the nozzles 61, and further means that a large amount of dust adheres to a portion of the tube bundle 3 to be cleaned by the nozzles 61. Thus, if the dust collection amount of the dust collecting mechanism 7 is large, the traveling speed (i.e., moving speed) of the nozzles 61 by the traveling mechanism 8 is reduced. As a result, air can be injected to a portion of the tube bundle 3 where a larger amount of dust adheres, for a longer time.

The cleaning device 5 cleans the tube bundle 3 that is disposed in a place where an upward airflow occurs and tilts with respect to the vertical direction such that the second face 32 faces obliquely downward and the first face 31 faces obliquely upward.

With this configuration, a larger amount of dust adheres to a portion of the tube bundle 3 near the second face 32. On the other hand, the nozzles 61 inject air to the tube bundle 3 from the side of the first face 31. However, since the injection directions of the nozzles 61 tilt with respect to the thickness direction of the tube bundle 3 as described above, air easily reaches a portion of the tube bundle 3 near the second face 32.

In addition, since the nozzles 61 inject air to the tube bundle 3 from the side of the first face 31, removed dust is easily dispersed at the side of the second face 32 of the tube bundle 3 together with an airflow. However, since there is the upward airflow to cause an airflow from the second face 32 toward the first face 31 in the tube bundle P, at least a part of dust dispersed at the side of the second face 32 passes through the tube bundle P from the second face 32 toward the first face 31 together with the airflow, and is dispersed to the side of the first face 31 of the tube bundle 3. Thus, even in the configuration in which the dust collecting hood 71 is disposed near the first face 31 of the tube bundle 3, dust removed from the branch tubes 22 can be sufficiently collected.

### Second Embodiment

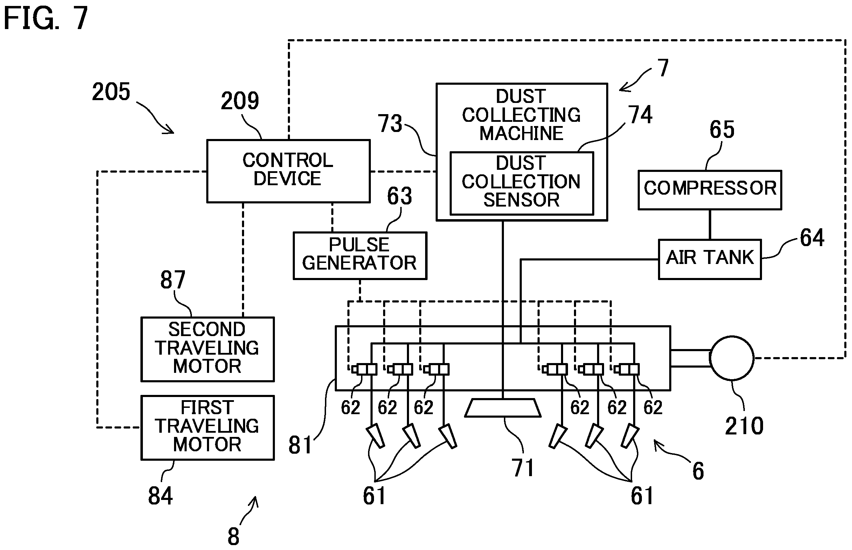

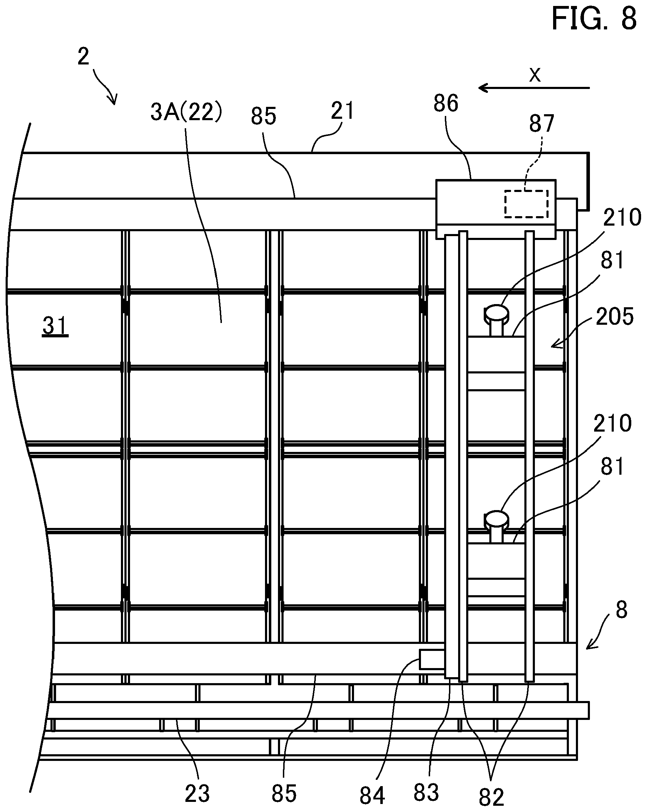

Next, a cleaning device 205 according to a second embodiment will be described. FIG. 7 is a block diagram illustrating a configuration of the cleaning device 205. FIG. 8 is a side view of a steam condenser 2 provided with the cleaning device 205.

The cleaning device 205 is different from the cleaning device 5 of the first embodiment in including an anemometer for measuring an air velocity. In the following description, components of the cleaning device 205 similar to those of the cleaning device 5 are denoted by the same reference characters and will not be described again, and components different from those of the cleaning device 5 will be mainly described.

The cleaning device 205 includes nozzles 61 that remove dust adhering to branch tubes 22 by injecting fluid to a tube bundle 3 from a first face 31, a traveling mechanism 8 that moves the nozzles 61 along the first face 31, and an anemometer 210 that is moved by the traveling mechanism 8 along the first face 31 and measures an air velocity of an airflow passing through the tube bundle 3. The cleaning device 205 may further include a control device 209 that controls the entire cleaning device 205. A measurement result of the anemometer 210 is input to the control device 209.

The anemometer 210 is provided on carriages 81. That is, the traveling mechanism 8 moves the anemometer 210 along the first face 31. In this example, since the carriages 81 are also provided with the nozzles 61, the anemometer 210 moves together with the nozzles 61.

The anemometer 210 may be disposed outside a dust collecting hood 71. Accordingly, the anemometer 210 can measure the air velocity of an airflow that is not significantly affected by suction of the dust collecting hood 71. In addition, the anemometer 210 may be disposed at a location different from the nozzles 61 in a traveling direction of the carriages 81. For example, the anemometer 210 is disposed at a location different from the nozzles 61 in the Y directions. That is, while the carriages 81 travel in the Y direction, one of the anemometer 210 or the nozzles 61 is located at a front side in the traveling direction, and the other is located at a rear side in the traveling direction.

The thus-configured anemometer 210 is capable of measuring an air velocity of an airflow passing through the tube bundle 3 at various locations on the first face 31 while being moved along the first face 31 by the traveling mechanism 8. The air velocity of the airflow passing through the tube bundle 3 relates to the degree of clogging of gaps between the branch tubes 22, that is, the amount of dust adhering to the branch tubes 22. As the amount of dust adhering to the branch tubes 22 increases, the air velocity decreases.

The controller 91 of the control device 209 adjusts a cleaning capacity by controlling the traveling mechanism 8 based on a detection result of the anemometer 210. For example, if the air velocity is low, the controller 91 increases the cleaning capacity, and if the air velocity is high, the controller 91 reduces the cleaning capacity.

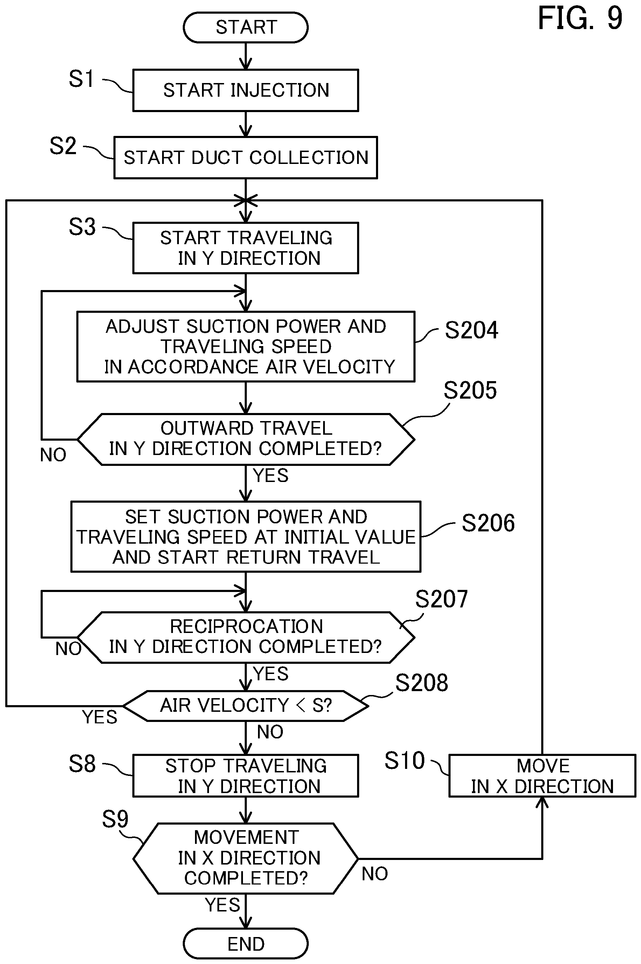

Control of the controller 91 will be specifically described with reference to FIG. 9. FIG. 9 is a flowchart depicting control of the controller 91. Cleaning by the cleaning device 205 is performed during operation of the steam condenser 2.

At start of cleaning, the carriages 81 are located at the lower end of a movable range of the carriages 81 on longitudinal frames 82. At this time, in the traveling direction, the anemometer 210 is located ahead of the nozzles 61. Processes in steps S1 through S3 are similar to those in the first embodiment. The controller 91 starts injection of air from the nozzles 61 (step S1), starts operation of a dust collecting machine 73 (step S2), and starts movement of the carriages 81 in the Y direction (step S3).

In step S3, after the carriages 81 start moving in the Y direction, the controller 91 controls the traveling speed of the carriages 81 in accordance with an air velocity measured by the anemometer 210 (hereinafter referred to as measured air velocity) to adjust cleaning capacity in step S204. In parallel with this adjustment, the controller 91 adjusts a suction power of the dust collecting machine 73 in accordance with the measured air velocity. Specifically, the traveling controller 96 adjusts the rotation speed of the first traveling motor 84 such that as the measured air velocity decreases, the rotation speed decreases. The dust collection controller 95 adjusts a suction power of the dust collecting machine 73 such that as the measured air velocity decreases, the suction power increases. The rotation speed and the suction power can be adjusted continuously or stepwise in accordance with the measured air velocity. A storage 93 stores a relationship between the air velocity and the traveling speed and a relationship between the air velocity and the suction power in the form of a table, a graph, or a function. The controller 91 reads a rotation speed and a suction power corresponding to the air velocity from the storage 93, and sets the rotation speed of the first traveling motor 84 and the suction power of the dust collecting machine 73 at the read-out rotation speed and suction power.

Until the carriages 81 reaches the upper end of a movable range in the Y directions, that is, in an outward path, the anemometer 210 is located ahead of the nozzles 61. That is, the anemometer 210 measures an air velocity of a portion of the tube bundle 3 from which dust is to be removed by the nozzles 61 prior to removal of the dust. This makes it possible to estimate the amount, before the removal, of dust adhering to a portion from which dust is to be removed by the nozzles 61. In a portion showing a low air velocity, that is, a portion to which a large amount of dust adheres, the moving speed of the nozzles 61 is reduced so that air is injected for a longer time and dust is elaborately removed. In a portion to which a large amount of dust adheres, a large amount of dust is dispersed, and thus, a suction power of the dust collecting machine 73 is increased to collect a larger amount of dust. On the other hand, in a portion showing a high air velocity, that is, a portion to which a small amount of dust adheres, the moving speed of the nozzles 61 is increased to shorten the time necessary for removal. Since a small amount of dust is dispersed in the portion to which a small amount of dust adheres, the suction power of the dust collecting machine 73 is reduced so that power consumption is reduced.

Such a process is continued until the carriages 81 reach the upper end of the movable range in the Y directions, that is, movement in an outward path is completed. Specifically, the controller 91 (specifically the traveling controller 96) determines whether movement in the outward path is completed or not in step S205. If movement in the outward path is not completed, the controller 91 returns to step S204. On the other hand, if movement of the outward path is completed, the controller 91 proceeds to step S206.

In step S206, the controller 91 sets a suction power of the dust collecting machine 73 at an initial value, and sets the rotation speed of the first traveling motor 84 at an initial value. It should be noted that the controller 91 reverses the rotation direction of the first traveling motor 84 to a direction opposite to the direction in the outward path so that the carriages 81 travel in a return path in the Y directions.

At this time, the controller 91 continues measurement of an air velocity by the anemometer 210. The measured air velocity is stored in the storage 93. In the return path, nozzles 61 are located ahead of the anemometer 210. That is, the anemometer 210 measures an air velocity of a portion of the tube bundle 3 from which dust has been removed by the nozzles 61. Accordingly, the amount, after the removal, of dust adhering to a portion where dust was removed by the nozzles 61 can be estimated.

In step S207, the controller 91 determines whether movement in the return path is completed or not, that is, reciprocation is completed or not. If reciprocation is not completed, the controller 91 repeats step S207, and waits for completion of reciprocation. If reciprocation is completed, the controller 91 proceeds to step S208.

In step S208, the controller 91 determines whether there is a place where the measured air velocity is lower than a predetermined determination value S in a return path or not. The determination value S is an air velocity at which dust can be determined to be sufficiently removed. If there is a place where the measured air velocity is lower than the determination value S, the controller 91 performs processes from step S3 again. Specifically, the presence of the place where the measured air velocity is lower than the determination value S means the presence of a portion from which dust has not been sufficiently removed, and thus, removal of dust by reciprocation of the carriages 81 in the Y directions is performed again. On the other hand, if there is no place where the measured air velocity is lower than the determination value S in the return path, the controller 91 proceeds to step S8.

Processes in and after step S8 are similar to those in the first embodiment. That is, the processes in steps S3 through S208 are performed with the position of the longitudinal frames 82 in the X directions being changed.

As described above, the cleaning device 205 can measure air velocities of an airflow passing through tube bundle 3 at various locations on the first face 31. The cleaning device 205 can utilize the measured air velocity for removal of dust by the nozzles 61. For example, the cleaning device 205 can adjust cleaning capacity, that is, dust removing capacity, in accordance with a dust adhesion situation at each place in the tube bundle 3 by measuring an air velocity before removal of dust. The cleaning device 205 can distinguish a portion from which dust has been appropriately removed and a portion from which dust has been insufficiently removed in the tube bundle 3 by measuring an air velocity after removal of dust. Based on the result, the cleaning device 205 can perform removal of dust from the portion where dust was insufficiently removed, again.

As described above, the cleaning device 205 includes the nozzles 61 (injector) that remove dust adhering to the branch tubes 22 (tubes) by injecting air (fluid) to the tube bundle 3 from the side of the first face 31, the traveling mechanism 8 that moves the nozzles 61 along the first face 31, and the anemometer 210 that is moved along the first face 31 by the traveling mechanism 8 and measures an air velocity of an airflow passing through the tube bundle 3.

With this configuration, the operator does not blow fluid to the tube bundle 3, but the nozzles 61 inject air to the tube bundle 3 while being moved by the traveling mechanism 8. Thus, cleaning of the tube bundle 3 can be easily performed. In addition, it is unnecessary for the operator to build a scaffold or the like for cleaning work around the tube bundle 3, and thus, cleaning of dust adhering to the branch tubes 22 can be easily performed. In addition, the cleaning device 205 measures an air velocity of an airflow passing through the tube bundle 3 while moving the anemometer 210 along the first face 31 by the traveling mechanism 8 identical to the traveling mechanism 8 for moving the nozzles 61. No traveling mechanism dedicated to the anemometer 210 needs to be additionally provided. In this case, air velocities at various portions of the tube bundle 3 can also be easily measured. In addition, since the common traveling mechanism 8 moves the nozzles 61 and the anemometer 210, an air velocity of a portion substantially the same as a portion to which the nozzles 61 blow fluid can be measured. Since the cleaning device 205 includes the anemometer 210, a measurement result of the air velocity can be used for adjusting cleaning capacity and/or determining cleaning efficiency.

The traveling mechanism 8 changes a traveling speed in injecting fluid from the nozzles 61, in accordance with a measurement result of the anemometer 210.

With this configuration, cleaning capacity can be adjusted in accordance with a determination result of the anemometer 210. That is, by reducing the traveling speed of the traveling mechanism 8, fluid can be blown to the branch tubes 22 for a longer time so that cleaning capacity can be enhanced. On the other hand, by increasing the traveling speed of the traveling mechanism 8, a period in which fluid is blown to the branch tubes 22 is shortened so that cleaning capacity is reduced. Such adjustment of cleaning capacity based on the measurement result of the anemometer 210, cleaning capacity can be adjusted in accordance with the amount of dust adhering to the branch tubes 22.

Adjustment of cleaning capacity is not limited to adjustment of the traveling speed of the traveling mechanism 8. For example, the nozzles 61 may change at least one of an injection pressure, an injection amount, an injection time, or an injection frequency, in accordance with the measurement result of the anemometer 210. Cleaning capacity can be enhanced by increasing the injection pressure, the injection amount, the injection time, or the injection frequency. These changes are adjusted in opposite directions so that cleaning capacity is reduced. These adjustments and the adjustment of the traveling speed of the traveling mechanism 8 described above may be combined.

In addition, the anemometer 210 moves together with the nozzles 61.

With this configuration, measurement of the air velocity by the anemometer 210 and injection of fluid from the nozzles 61 can be performed in parallel.

The anemometer 210 is located ahead of the nozzles 61 in the traveling direction of the nozzles 61.

With this configuration, an air velocity of a portion of the tube bundle 3 to which fluid is blown from the nozzles 61 can be measured prior to injection of fluid. Accordingly, cleaning capacity can be adjusted based on the determination result of the air velocity. As described above, adjustment of cleaning capacity can be implemented by adjusting a fuel injection manner from the nozzles 61 or by adjusting the traveling speed of the traveling mechanism 8.

Alternatively, the anemometer 210 is disposed behind the nozzles 61 in the traveling direction of the nozzles 61.

With this configuration, an air velocity of a portion of the tube bundle 3 to which fluid has been blown from nozzles 61 can be measured after injection of fluid. In this manner, it is possible to evaluate whether removal of dust is sufficient or not, based on the air velocity.

### Third Embodiment

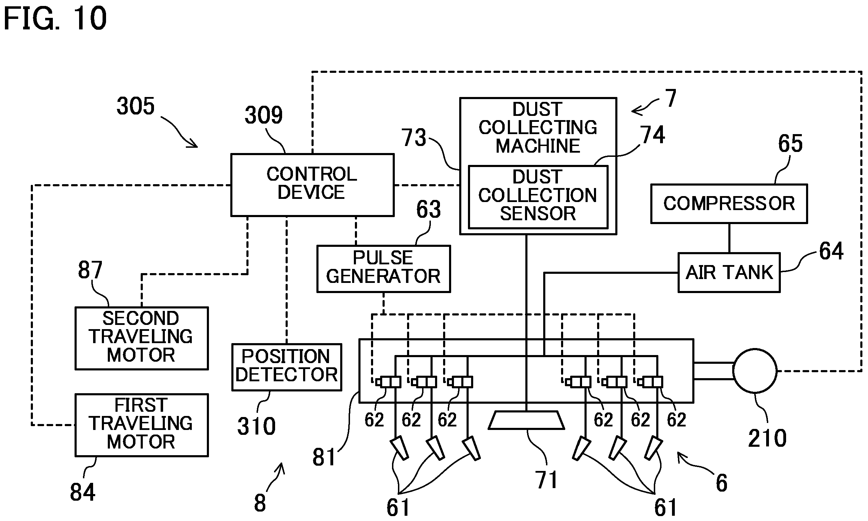

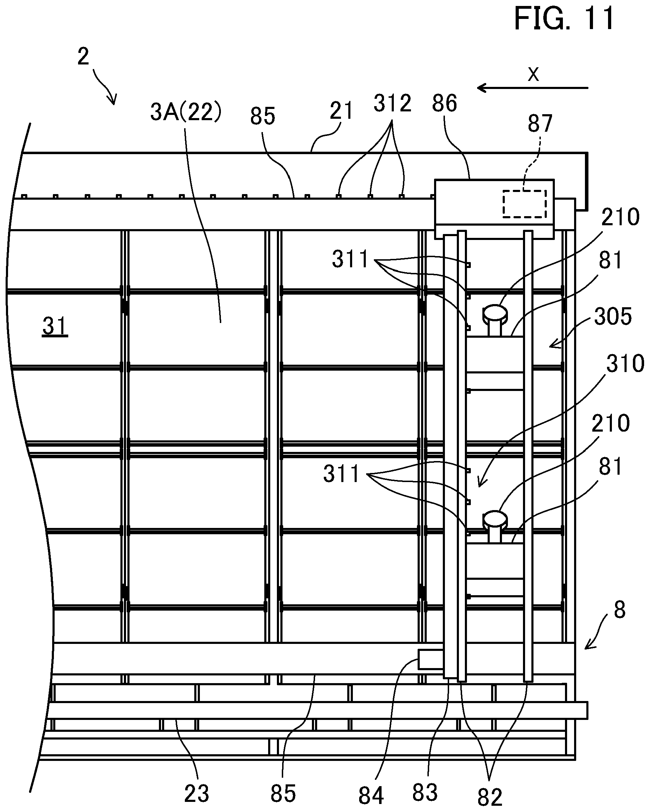

Next, a cleaning device 305 according to a third embodiment will be described. FIG. 10 is a block diagram illustrating a configuration of the cleaning device 305. FIG. 11 is a side view of a steam condenser 2 provided with the cleaning device 305.

The cleaning device 305 is the same as the cleaning device 205 in including the anemometer 210, but is different from the cleaning device 205 in the method for cleaning the cleaning device 205. In the following description, components of the cleaning device 305 similar to those of the cleaning devices 5 and 205 are denoted by the same reference characters and will not be described again, and components different from those of the cleaning devices 5 and 205 will be mainly described.

The cleaning device 305 includes nozzles 61 that remove dust adhering to branch tubes 22 by injecting fluid to a tube bundle 3 from a side of a first face 31, a traveling mechanism 8 that moves the nozzles 61 along the first face 31, and an anemometer 210 that is moved by the traveling mechanism 8 along the first face 31 and measures an air velocity of an airflow passing through the tube bundle 3. The cleaning device 305 may further include a control device 309 that controls the entire cleaning device 305. A measurement result of the anemometer 210 is input to the control device 309. The cleaning device 305 individually performs air velocity measurement by the anemometer 210 and fluid injection from the nozzles 61. That is, the cleaning device 305 measures air velocities in various portions of the tube bundle 3 while moving the anemometer 210 along the first face 31 with fluid injection from the nozzles 61 stopped.

The cleaning device 305 further includes a position detector 310 that detects positions of the nozzles 61 and the anemometer 210. The position detector 310 substantially detects positions of the nozzles 61 and the anemometer 210 by detecting positions of carriages 81. The position detector 310 includes a plurality of first position sensors 311 provided on longitudinal frames 82 and a plurality of second position sensors 312 provided on lateral frames 85. The first position sensors 311 detect that the carriages 81 are at predetermined positions. The first position sensors 311 are, for example, limit switches, photoelectric sensors, or magnetic sensors. Each of the first position sensors 311 outputs a detection signal (e.g., an ON signal) when the carriages 81 reach the position of the first position sensor 311. The detection signals of the first position sensors 311 are input to the control device 309. Each of the second position sensors 312 outputs a detection signal (e.g., an ON signal) when a traveling car 86 reaches the position of the second position sensor 312. The detection signals of the second position sensors 312 are input to the control device 309.

A plurality of measurement points where an air velocity is to be measured are provided on the first face 31 of the tube bundle 3. The plurality of measurement points are arranged in a lattice pattern extending along the X directions and the Y directions on the first face 31. That is, the plurality of measurement points at intervals in the Y directions to form a line, and a plurality of such lines are provided at intervals in the X directions. The plurality of measurement points are arranged on a trajectory of the anemometer 210 formed by movement of the carriages 81 with air injection, which will be described later.

The first position sensors 311 are arranged at positions corresponding to the plurality of measurement points in the Y directions. The first position sensors 311 are arranged to detect the carriages 81 when the anemometer 210 is located at the same position as the measurement point in the Y directions. The second position sensors 312 are arranged at positions corresponding to the plurality of measurement points in the X directions. The second position sensors 312 are arranged to detect the traveling car 86 when the anemometer 210 is located at the same position as the measurement point in the X directions.

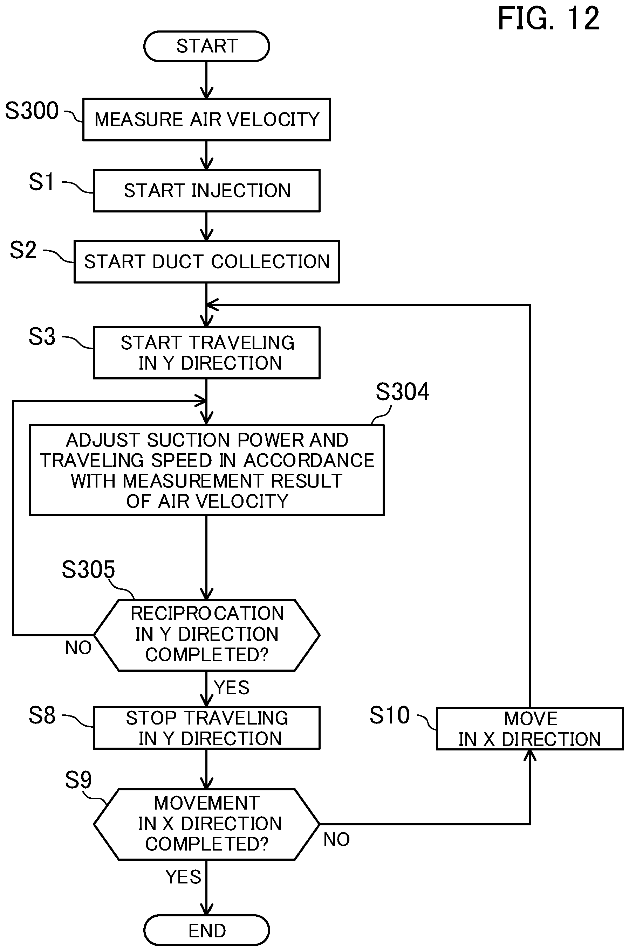

Control of the controller 91 of the control device 309 will be specifically described with reference to FIG. 12. FIG. 12 is a flowchart depicting control of the controller 91 of the control device 309.

First, in step S300, the controller 91 measures an air velocity of the tube bundle 3. The measurement of the air velocity by the cleaning device 305 is performed during operation of the steam condenser 2. The controller 91 moves the carriages 81 and the longitudinal frames 82 to initial positions of the air velocity measurement. For example, the controller 91 moves the carriages 81 to the lower end of a movable range of the carriages 81 on the longitudinal frames 82. Based on a detection result of the second position sensors 312, the controller 91 moves the longitudinal frames 82 to a position at which the position of the anemometer 210 in the X directions coincides with a line of a plurality of measurement points at one end in the X directions among lines of a plurality of measurement points arranged in the Y directions. As described above, the second position sensors 312 is disposed such that if one of the plurality of lines of measurement points arranged in the Y directions coincides with the position of the anemometer 210 in the X directions, the second position sensors 312 detects arrival of the traveling car 86. Then, the controller 91 moves the carriages 81 from the lower end toward the upper end of the movable ranges of the carriages 81 in the longitudinal frames 82 in the Y direction. When the anemometer 210 arrives at one of the measurement points (i.e., when the controller 91 receives a detection signal from one of the first position sensors 311), the controller 91 stops the carriages 81, and causes the anemometer 210 to measure an air velocity. The controller 91 links the measured air velocity with the position of the measurement point, and stores the measured air velocity and the position of the measurement point in the storage 93. Thereafter, the controller 91 restarts movement of the carriages 81 and measures air velocities at all the measurement points arranged in the Y directions. When measurement of air velocities at all the measurement points in the line of the plurality of measurement points arranged in the Y directions is completed, the controller 91 changes the position of the longitudinal frames 82 in the X directions, and performs the air velocity measurement on another line of the plurality of measurement points arranged in the Y directions. The controller 91 repeats this process to thereby complete air velocity measurement at all the measurement points.

In the air velocity measurement, the position of the longitudinal frames 82 in the X directions in movement of the carriages 81 in the Y direction is the same as the position of the longitudinal frames 82 in the X directions in movement of the carriages 81 in the Y direction with air being injected from nozzles 61 described later. That is, a trajectory of the carriages 81 in air velocity measurement is the same as a trajectory of the carriages 81 in air injection.

Subsequently, the controller 91 performs removal of dust adhering to heat exchanger tubes 22. The removal of dust by the cleaning device 305 is performed while the steam condenser 2 is stopped. Specifically, in step S1, the controller 91 moves the carriages 81 and the longitudinal frames 82 to initial positions of cleaning, and starts injection of air from the nozzles 61. The initial positions of cleaning are the same as initial positions in air velocity measurement. Thereafter, the controller 91 performs processes in steps S2 and S3. Processes in steps S1 through S3 are similar to those in the first embodiment.

After the carriages 81 start moving in the Y direction, in step S304, the controller 91 adjusts a traveling speed of the carriages 81 and a suction power of the dust collecting machine 73 based on a measurement result of the air velocity in step S300. Specifically, since the position of the longitudinal frames 82 in the X direction in air injection is the same as the position of the longitudinal frames 82 in the X direction in air velocity measurement, the carriages 81 moves on the same trajectory as that in the air velocity measurement. Thus, the nozzles 61 pass through or near the measurement points. Based on a detection result of the first position sensors 311, the controller 91 determines whether the carriages 81 have arrived at positions corresponding to the measurement points or not. If the carriages 81 arrive at the positions corresponding to the measurement points, the controller 91 reads an air velocity stored in the storage 93 and corresponding to the measurement point. In addition, the controller 91 reads a rotation speed and a suction power corresponding to the air velocity from the storage 93, and sets the rotation speed of the first traveling motor 84 and the suction power of the dust collecting machine 73 at the rotation speed and the suction power that have been read out. As described in the second embodiment, the storage 93 stores a relationship between the air velocity and the traveling speed and a relationship between the air velocity and the suction power in the form of a table, a graph, or a function. The controller 91 repeats similar adjustment every when the carriages 81 reach a position corresponding to another measurement point. In this manner, cleaning is performed on the branch tubes 22 with the traveling speed of the carriages 81 and the suction power of the dust collecting machine 73 being adjusted in accordance with the air velocity.

Thereafter, in step S305, the controller 91 determines whether reciprocation of the carriages 81 in the Y directions is completed or not. If the reciprocation of the carriages 81 in the Y directions is not completed, the process in step S304 continues. In this manner, cleaning is performed on the branch tubes 22 in both an outward path and a return path of the carriages 81 in the Y directions.

If the reciprocation of the carriages 81 in the Y directions is completed, the controller 91 proceeds to step S8. Processes subsequent to step S8 are similar to those in the first embodiment. That is, the process described above is performed at a different position in the X direction.

As described above, the cleaning device 305 can measure air velocities of an airflow passing through the tube bundle 3 at various locations on the first face 31. The cleaning device 305 can utilize the measured air velocity for removing dust using the nozzles 61. The cleaning device 305 can adjust dust removal capacity in accordance with a dust adhesion situation at each place in the tube bundle 3 by measuring the air velocity before removal of dust.

It should be noted that the cleaning device 305 separately moves the anemometer 210 by the traveling mechanism 8 for air velocity measurement and moves the nozzles 61 by the traveling mechanism 8 for dust removal. Thus, the operating state of the steam condenser 2 can be made different between air velocity measurement and dust removal such that the steam condenser 2 is operated in air velocity measurement and is stopped in dust removal, for example.

It should be noted that the controller 91 may determine whether or not the process of dust removal in and after step S1 is performed in accordance with a result of air the velocity measurement. For example, if there is a measurement point at which the air velocity is lower than a predetermined determination value, the controller 91 performs the processes of dust removal in and after step S1, whereas if there is no measurement point at which the air velocity is lower than the predetermined determination value, the controller 91 does not need to perform the processes of dust removal in and after step S1. The determination value is an air velocity at which it is determined that dust needs to be removed.

In addition, the controller 91 may perform air velocity measurement again after the process of dust removal is completed. The controller 91 can determine whether dust has been sufficiently removed or not by air velocity measurement after the dust removal. If there is a measurement point at which the air velocity is lower than the predetermined determination value, the controller 91 performs the process of dust removal in and after step S1 again, whereas if there is no measurement point at which the air velocity is lower than the predetermined determination value, the controller 91 may finish the process of dust removal. The determination value is an air velocity at which it is determined that dust is sufficiently removed. The cleaning device 305 can perform dust removal again on a portion where dust is insufficiently removed. This determination value may be equal to or different from the determination value of air velocity measurement before the dust removal.

As described above, the cleaning device 305 includes the nozzles 61 (injector) that removes dust adhering to the branch tubes 22 (tubes) by injecting air (fluid) to the tube bundle 3 from the side of the first face 31, the traveling mechanism 8 that moves the nozzles 61 along the first face 31, and the anemometer 210 that is moved along the first face 31 by the traveling mechanism 8 and measures an air velocity of an airflow passing through the tube bundle 3.

With this configuration, the operator does not blow fluid to the tube bundle 3, but the nozzles 61 inject air to the tube bundle 3 while being moved by the traveling mechanism 8. Thus, cleaning of the tube bundle 3 can be easily performed. In addition, it is unnecessary for the operator to build a scaffold or the like around the tube bundle 3 in order to perform cleaning work, and thus, cleaning of dust adhering to the branch tubes 22 can be easily performed. In addition, the cleaning device 205 measures an air velocity of an airflow passing through the tube bundle 3 while moving the anemometer 210 along the first face 31 by using the traveling mechanism 8 identical to the traveling mechanism 8 for moving the nozzles 61. A traveling mechanism dedicated to the anemometer 210 does not need to be additionally provided. In this case, air velocities at various portions of the tube bundle 3 can also be easily measured. In addition, since the common traveling mechanism 8 moves the nozzles 61 and the anemometer 210, an air velocity of a portion substantially identical to a portion to which the nozzles 61 blow fluid can be measured. Since the cleaning device 305 includes the anemometer 210, a measurement result of the air velocity can be used for adjusting cleaning capacity and/or for determining cleaning efficiency.

Note that the position detector 308 may have any configuration as long as the positions of the nozzles 61 and the anemometer 210 can be detected. For example, the position detector 308 may be a photoelectric sensor including a transceiver provided in the carriages 81, and a reflector provided in, for example, the longitudinal frames 82, the lateral frames 85, or the heat exchanger tube 22. The transceiver provided in the carriages 81 detects reflected light from the reflector to thereby detect the position of the carriages 81, and further, the positions of the nozzles 61 and the anemometer 210. Alternatively, an encoder may be provided in each of the first traveling motor 84 and the second traveling motor 87 so that the position of the carriages 81 can be detected based on outputs of the encoders. The position detector for detecting the position of the nozzles 61 and the position detector for detecting the position of the anemometer 210 may be provided as different components. As described above, the position detector 308 can employ various known position detection techniques. It should be noted that embodiments other than the third embodiment also include the position detector of the carriages 81 as clear from the contents thereof, although not specified.

### Fourth Embodiment

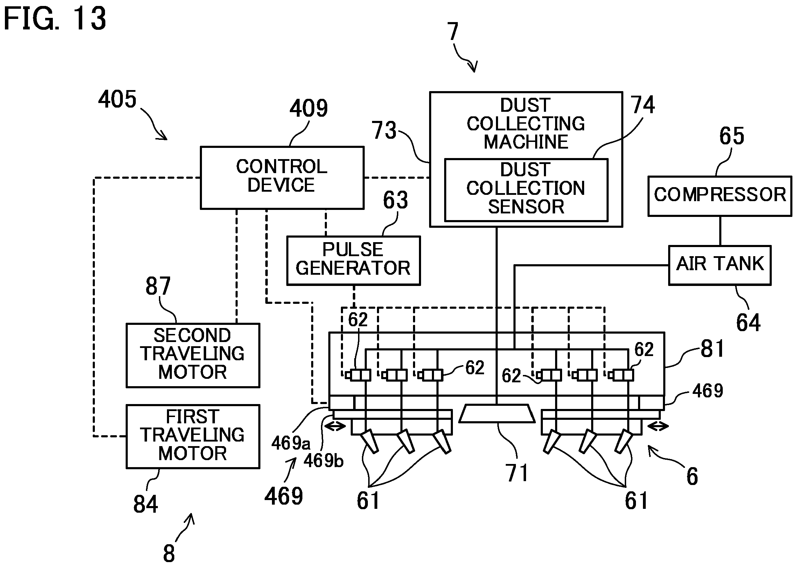

A cleaning device 405 according to a fourth embodiment will now be described. FIG. 13 is a block diagram illustrating a configuration of the cleaning device 405. The cleaning device 405 is different from the cleaning device 5 in that the nozzles 61 are configured to rock and inject fluid (air) while rocking. In the following description, components of the cleaning device 405 similar to those of the cleaning device 5 are denoted by the same reference characters and will not be described again, and components different from those of the cleaning device 5 will be mainly described.

The cleaning device 405 includes nozzles 61 for removing dust adhering to a branch tubes 22, and a traveling mechanism 8 that moves the nozzles 61 along a first face 31 of a tube bundle 3. The nozzles 61 are configured to rock and inject air while rocking. Since the nozzles 61 rock, when the nozzles 61 move while injecting air, the air can be blown to a relatively wide range of a tube bundle 3.

Specifically, the cleaning device 405 includes a rocking mechanism 469 that allows the nozzles 61 to rock. The rocking mechanism 469 rocks the nozzles 61 in directions intersecting with directions in which the nozzles 61 move. For example, the rocking mechanism 469 rocks the nozzles 61 in directions (i.e., X directions) orthogonal to directions in which carriages 81 move (i.e., Y directions) that are directions among directions in which the nozzles 61 move.

For example, the rocking mechanism 469 includes a linear motor 469a and a linear guide 469b. The nozzles 61 are supported by the linear guide 469b to be movable in the X directions. The linear motor 469a causes the nozzles 61 to reciprocate in the X directions along the linear guide 469b. The linear motor 469a operates based on a signal from a control device 409.

The rocking mechanism 469 rocks the nozzles 61 in the X directions while the nozzles 61 move in the Y directions while injecting air. In the case where the nozzles 61 inject air while moving in the Y directions, air is blown to narrow regions extending in the Y directions in the tube bundle 3. At this time, the width in the X directions of the region of the tube bundle 3 to which air is blown can be enlarged by rocking the nozzles 61 in the X directions.

The rocking mechanism 469 is not limited to a mechanism that causes the nozzles 61 to reciprocate linearly. For example, the rocking mechanism 469 may cause the nozzles 61 to reciprocate along an arc about an axis (e.g., axis extending in the Y directions). That is, the rocking mechanism 469 may cause the nozzles 61 to reciprocate along the arc by a rotary motor. At this time, the rocking mechanism 469 causes the nozzles 61 to reciprocate along the arc but generally in the X directions. At this time, in a case where the air injection direction from the nozzles 61 intersects with a radial direction about a rocking axis of the nozzles 61, the rocking mechanism 469 only needs to support the nozzles 61 such that the nozzles 61 are rockable about the axis, and does not need to include the rotary motor. In this case, the nozzles 61 can rock in reaction to intermittent injection of air from the nozzles 61.

As described above, the cleaning device 405 includes the nozzles 61 (injector) that remove dust adhering to the branch tubes 22 (tubes) by injecting air (fluid) to the tube bundle 3 from the side of the first face 31, and the traveling mechanism 8 that moves the nozzles 61 along the first face 31. The nozzles 61 are configured to rock, and inject air while rocking.

With this configuration, the operator does not blow fluid to the tube bundle 3, but the nozzles 61 inject air to the tube bundle 3 while being moved by the traveling mechanism 8. Thus, cleaning of the tube bundle 3 can be easily performed. In addition, it is unnecessary for the operator to build a scaffold or the like around the tube bundle 3 in order to perform cleaning work, and thus, cleaning of dust adhering to the branch tubes 22 can be easily performed. In addition, since the nozzles 61 inject air while rocking, air can be blown to a wide range of the tube bundle 3.

### Other Embodiments

In the foregoing section, the embodiments have been described as examples of the technique disclosed in the present application. The technique disclosed here, however, is not limited to these embodiments, and is applicable to other embodiments obtained by changes, replacements, additions, and/or omissions as necessary. Components described in the above embodiments may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the cleaning devices 5, 205, 305, and 405 clean the tube bundle 3 of the steam condenser 2, but a target of cleaning is not limited to this. Any tube bundle can be a target of the cleaning device 5 as long as the tube bundle includes a plurality of tubes and is formed in a plate shape as a whole with a first face and a second face that are opposed to each other. Tubes constituting the tube bundle are not limited to heat exchanger tubes of a heat exchanger.

Cleaning by the cleaning device may be performed during operation of the steam condenser 2, may be performed while the steam condenser 2 and the fans 14 are stopped (e.g., during an overhaul), or may be performed while the steam condenser 2 operates and the fans 14 are stopped. It should be noted that air velocity measurement is performed while the fans 14 are operating.

In the tube bundle 3, the plurality of branch tubes 22 are stacked in the thickness direction and arranged in a staggered pattern, but the present teaching is not limited to this example. The tube bundle 3 may be constituted only by a single layer in which a plurality of branch tubes 22 are arranged.

In the tube bundle 3, the position of the branch tubes 22 in the thickness direction of the tube bundle 3, that is, the position in the Z directions, are different between an upper half and a lower half of the tube bundle 3, but the present teaching is not limited to this example. The branch tubes 22 may not extend linearly over the entire length.

The configurations of the cleaning devices 5, 205, 305, and 405 are not limited to the configurations described above.

For example, two sets of each of the nozzles 61, the valves 62, and the dust collecting hood 71 are provided, but one or three sets thereof may be provided.

Six nozzles 61 are provided in one carriage 81, but any number of nozzles 61 may be provided. The injection direction U of each nozzle 61 tilts with respect to the thickness direction of the tube bundle 3, but may coincide with the thickness direction. The injection direction U of each nozzle 61 extends in parallel with a plane orthogonal to the axis of the branch tubes 22, but may tilt with respect to this plane. The nozzles 61 inject air intermittently, but may inject air continuously while being moved by the traveling mechanism 8.

In addition, at least one of the injection pressure, the injection amount, the injection time, or the injection frequency from the nozzles 61 may be controlled. For example, at least one of the injection pressure, the injection amount, the injection time, or the injection frequency from the nozzles 61 may be controlled based on a detection result of the dust collection sensor 74 or air velocity measurement. Specifically, when the dust collection amount is large or the air velocity is low, at least one of the injection pressure, the injection amount, the injection time, or the injection frequency from the nozzles 61 may be increased. This control of at least one of the injection pressure, the injection amount, the injection time, or the injection frequency may be combined with control of the suction power of the dust collecting machine 73 based on the dust collection amount and/or control of the moving speed of the carriages 81, or may be performed instead of control of suction power and/or control of a moving speed.

The nozzles 61 inject air to the first face 31 of the tube bundle 3, but may inject air to the second face 32 of the tube bundle 3. In this case, the traveling mechanism 8 is also disposed at a side of the second face 32 of the tube bundle 3.

The nozzles 61 inject air, and the fluid injected by the nozzles 61 may be liquid such as water. In this case, the injected liquid drops downward at the side of the second face 32 of the tube bundle 3, and thus, the fans 14 may be disposed in the air passage 12, instead of being disposed immediately under the tube bundle 3. In addition, both nozzles 61 that inject air and nozzles 61 that inject liquid such as water may be provided.

The dust collecting hood 71 is attached to the carriages 81 and moves together with the nozzles 61, but the present teaching is not limited to this example. For example, the dust collecting hood 71 may extend over the entire region of the tube bundle 3 in the X directions and may be fixed to an upper portion of the tube bundle 3 (e.g., at substantially the same height of the steam manifold 21). When dust is removed and dispersed, the dust rises upward. Thus, even in the case where the dust collecting hood 71 is fixed to the upper portion of the tube bundle 3, dust can be collected. Alternatively, the dust collecting hood 71 may be configured to move only in the X directions together with the longitudinal frames 82. In this case, the dust collecting hood 71 may not extend over the entire region of the tube bundle 3 in the X directions, and only needs to have such a size that generally covers the width in the X direction of a range where cleaning is performed with the nozzles 61 moving in the Y directions.

The dust collecting hood 71 may be disposed at the side of the tube bundle 3 opposite to the nozzles 61. That is, in a case where nozzles 61 are disposed at the first face 31 of the tube bundle 3, the dust collecting hood 71 may be disposed at the second face 32. In this case, in addition to the traveling mechanism 8, a traveling mechanism for moving the dust collecting hood 71 may be provided at the second face 32 of the tube bundle 3.

The cleaning devices 5, 205, 305, and 405 may not include the dust collecting mechanism 7.

The configuration of the traveling mechanism 8 is not limited to the configuration described above. The traveling mechanism 8 may have any configuration as long as the nozzles 61 are movable along the first face 31 of the tube bundle 3. For example, in a case where the nozzles 61 attached to the carriages 81 cover the entire region of the tube bundle 3 in the X directions (e.g., a case where a dimension of the tube bundle 3 in the X directions is small), it is sufficient for the traveling mechanism 8 to move the nozzles 61 only in the Y directions, and thus, the lateral frames 85 and the traveling car 86 can be omitted.

The driving method of the carriages 81 and the driving method of the longitudinal frames 82 are not limited to the methods described above. For example, a traveling car typified by the traveling car 86 may move the carriages 81 along the longitudinal frames 82. Alternatively, the carriages 81 may be moved by a rack-and-pinion or a pantograph.

The traveling mechanism 8 causes the carriages 81 to reciprocate in the Y directions without changing the position in the X directions. That is, the same portion of the tube bundle 3 is cleaned twice. However, the present teaching is not limited to this example. The traveling mechanism 8 may clean different branch tubes 22 by changing the position of the carriages 81 in the X directions between an outward path and a return path in the Y directions. In addition, a moving pitch of the carriages 81 in the X directions, that is, a moving pitch of the longitudinal frames 82 in the X directions, may be set in any manner. For example, the moving pitch of the carriages 81 in the X directions may be equal to the pitch of the branch tubes 22 arranged in the X directions. In this case, a plurality of nozzles 61 having the same injection direction U are provided, one gap between the branch tubes 22 extending in the tilt direction V is cleaned by another nozzle 61 again.

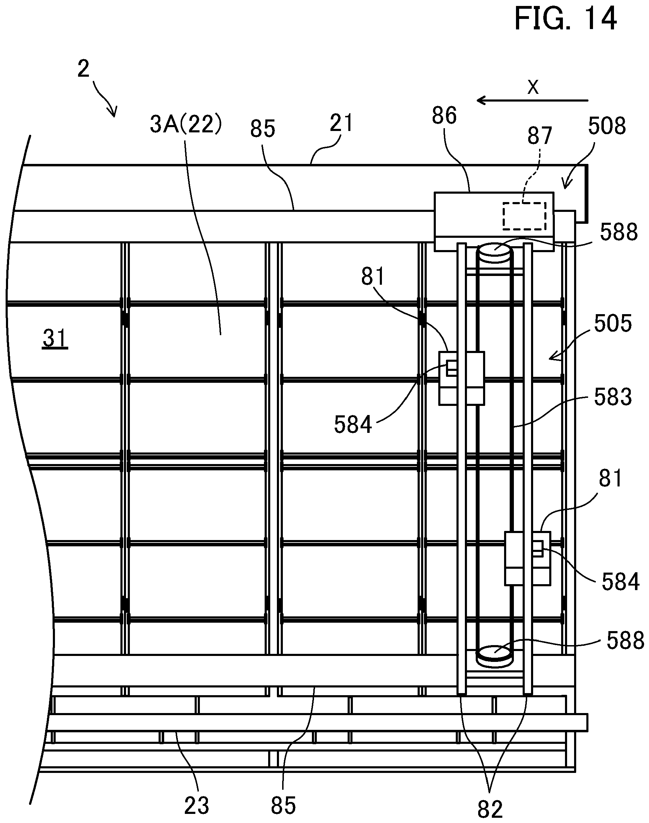

Alternatively, a traveling mechanism 508 may have a configuration illustrated in FIG. 14. Specifically, in a cleaning device 505, two carriages 81 are respectively supported by two longitudinal frames 82 to be movable in the Y directions. The traveling mechanism 508 includes an endless belt 583 coupling two carriages 81, and driven rollers 588 around which the endless belt 583 is wound. The two carriages 81 are coupled to each other by the endless belt 583 to be of a traction type such that when one of the carriages 81 is lifted, the other carriage 81 is lowered. Each of the carriages 81 includes wheels (not shown) and a motor 584 for driving the wheels. When one carriage 81 is lifted along the longitudinal frames 82 by driving of the motor 584, the other carriage 81 is lowered along the longitudinal frames 82. The traction-type configuration can reduce a driving force when one carriage 81 is lifted by the self-weight of the other carriage 81. At this time, the motor 584 of the lowered carriage 81 may function as a power generator and perform regeneration. Electric power obtained by the regeneration is stored in a battery (not shown) and used as driving power of the motor 584.

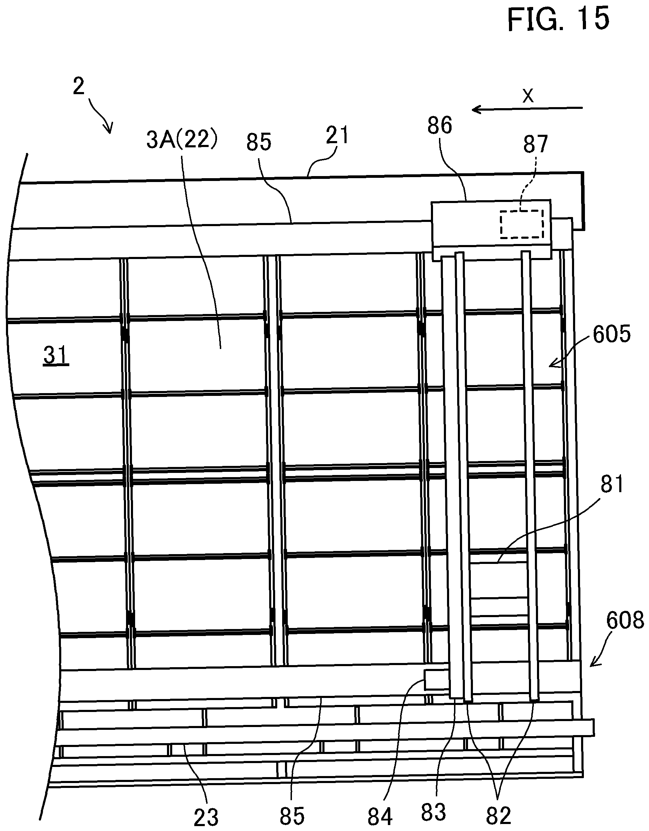

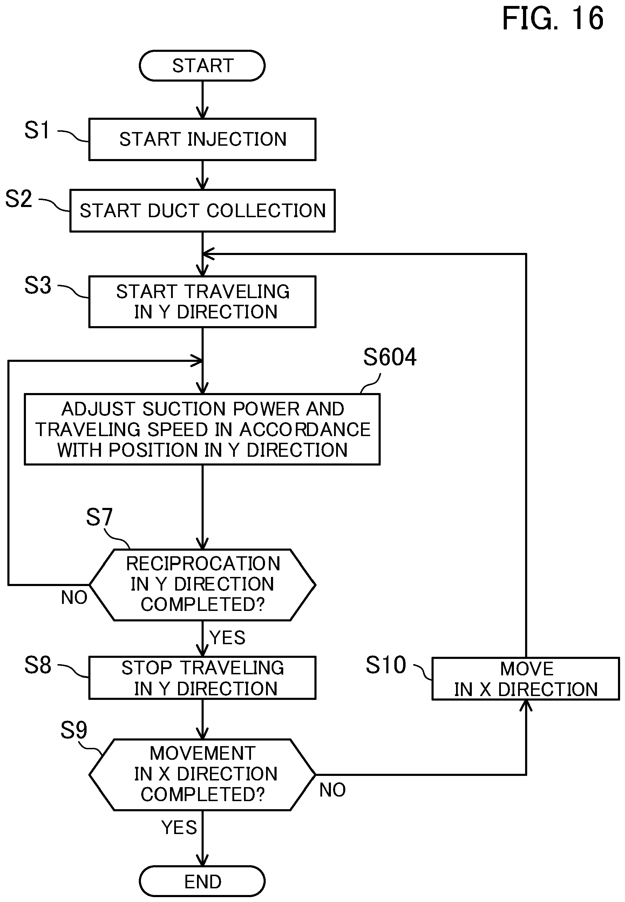

As another embodiment, a cleaning device 605 having a configuration illustrated in FIG. 15 may be employed. The cleaning device 605 has substantially the same configuration as the cleaning device 5, and is different from the cleaning device 5 in that one carriage 81 is provided. In a tube bundle 3 to which the cleaning device 605 is applied, branch tubes 22 extend linearly over the entire length of the tube bundle 3. That is, the branch tubes 22 are not twisted at an intermediate position, and the position thereof does not change in the thickness direction of the tube bundle 3. In the cleaning device 605, nozzles 61 and a dust collecting hood 71 move over the entire length of the branch tubes 22 together with one carriage 81. In addition, the cleaning device 605 is different from the cleaning device 5 in controlling a suction power of the dust collecting machine 73 and a rotation speed of the first traveling motor 84 when the carriage 81 moves in the Y directions. Specifically, a controller 91 of the cleaning device 605 performs control in accordance with the flowchart in FIG. 16. Specifically, processes in steps S1 through S3 are the same as those in the cleaning device 5. When movement of the carriage 81 in the Y direction starts, in step S604, the traveling controller 96 adjusts the rotation speed of the first traveling motor 84 in accordance with a position of the carriage 81 in the Y directions (i.e., position of the nozzles 61 in the Y directions). In addition, the dust collection controller 95 adjusts a suction power of the dust collecting machine 73 in accordance with the position of the carriage 81 in the Y directions (i.e., position of the dust collecting hood 71 in the Y directions). For example, air flows to the tube bundle 3 from below, and passes from the second face 32 toward the first face 31. Thus, a larger amount of air passes through a relatively lower portion of the tube bundle 3. Consequently, a larger amount of dust adheres to the relatively lower portion of the tube bundle 3. In view of this, the traveling controller 96 adjusts the rotation speed of the first traveling motor 84 such that the traveling speed of the carriage 81 is lower in a lower portion of the tube bundle 3 than in an upper portion of the tube bundle 3. Accordingly, the moving speed of the nozzles 61 in the Y direction is lower in a place with a larger amount of dust, and air is injected to such a place of the branch tubes 22 for a longer time so that dust can be more elaborately removed. In a portion of the tube bundle 3 to which a large amount of dust adheres, a large amount of dust is removed from the branch tubes 22 and dispersed. In addition, when the moving speed of the nozzles 61 in the Y direction is reduced in such a place, the amount of dispersed dust further increases. In view of this, the dust collection controller 95 adjusts such that a suction power of the dust collecting machine 73 is larger in a lower portion of the tube bundle 3 than in an upper portion of the tube bundle 3. By increasing the suction power of the dust collecting machine 73, the increased amount of dust can be appropriately collected. The rotation speed of the first traveling motor 84 and the suction power of the dust collecting machine 73 may be adjusted stepwise or linearly in accordance with the position of the carriages 81 in the Y directions.

The controls by the control devices 9, 209, 309, and 409 described above are examples, and the present teaching is not limited to these examples. For example, in the flowchart of FIG. 6, the processes in steps S1 through S3 may be performed in an order different from that described above, or may be performed in parallel. Steps S4 and S5 may also be performed in an order different from that described above, or may be performed in parallel. That is, as long as cleaning by the cleaning device 5 is approximately performed, the order of the steps may be changed, one or more of the steps may be omitted, and/or one or more steps may be added.

In steps S4 through S6, it is determined whether the dust collection amount is greater than or equal to the predetermined threshold or not, and if the dust collection amount is greater than or equal to the threshold, the suction power of the dust collecting machine 73 is increased and the first traveling motor 84 is reduced. Alternatively, only one of the suction power or rotation speed may be adjusted. In addition, the suction power of the dust collecting machine 73 and/or the rotation speed of the first traveling motor 84 may not be adjusted in two stages, but may be adjusted in three or more stages in accordance with the dust collection amount, or may be adjusted linearly in accordance with the dust collection amount.

### INDUSTRIAL APPLICABILITY

As described above, the technique disclosed here is useful for a cleaning device.

### DESCRIPTION OF REFERENCE CHARACTERS

22 branch tube (tube)
3 tube bundle
31 first face
32 second face
5, 205, 305, 405, 505, 605 cleaning device
61 nozzle (injector)
7 dust collecting mechanism
71 dust collecting hood (sucker)
72 suction port
8, 508 traveling mechanism

## Claims

1. A cleaning device configured to clean a tube bundle, the tube bundle including a plurality of tubes and having a plate shape as a whole with a first face and a second face that are opposed to each other, the cleaning device comprising:
an injector configured to remove dust adhering to the tubes by injecting fluid to the tube bundle from a side of the first face; and
a traveling mechanism configured to move the injector along the first face.

2. The cleaning device according to claim 1, wherein
the injector injects fluid in a direction that tilts with respect to a thickness direction of the tube bundle.

3. The cleaning device according to claim 1 or 2, wherein
the injector intermittently injects fluid while being moved by the traveling mechanism.

4. The cleaning device according to any one of claims 1 to 3, further comprising
a dust collecting mechanism configured to collect dust that is being dispersed.

5. The cleaning device according to claim 4, wherein
the dust collecting mechanism includes a sucker having a suction port through which dust is sucked, and
the sucker moves together with the injector.

6. The cleaning device according to claim 4 or 5, wherein
the sucker is disposed at a side of the tube bundle at which the injector is disposed.

7. The cleaning device according to any one of claims 4 to 6, wherein
the traveling mechanism changes a traveling speed in accordance with a dust collection amount of the dust collecting mechanism.

8. The cleaning device according to any one of claims 1 to 6, wherein
the traveling mechanism changes a traveling speed in accordance with a location in the tube bundle.

9. The cleaning device according to claim 8, wherein
the tube bundle is disposed in a region where an upward flow of air occurs, and tilts with respect to a vertical direction such that the second face faces obliquely downward and the first face faces obliquely upward, and
the traveling mechanism sets the traveling speed lower in a lower portion of the tube bundle than in an upper portion of the tube bundle.

10. The cleaning device according to any one of claims 1 to 8, wherein
the tube bundle is disposed in a region where an upward flow of air occurs, and tilts with respect to a vertical direction such that the second face faces obliquely downward and the first face faces obliquely upward.

11. The cleaning device according to claim 1, further comprising
an anemometer configured to be moved by the traveling mechanism along the first face and to measure an air velocity of an airflow passing through the tube bundle.

12. The cleaning device according to claim 11, wherein
the traveling mechanism changes a traveling speed in injecting fluid from the injector, in accordance with a measurement result of the anemometer.

13. The cleaning device according to claim 11 or 12, wherein
the injector changes at least one of an injection pressure, an injection amount, an injection time, or an injection frequency, in accordance with a measurement result of the anemometer.

14. The cleaning device according to claim 1, wherein
the injector is configured to rock and inject fluid while rocking.
